# EUROPÄISCHE PATENTSCHRIFT

(11) **EP 4 197 628 B1**
(45) Veröffentlichungstag und Bekanntmachung des Hinweises auf die Patenterteilung: **01.04.2026**
(21) Anmeldenummer: 21216130.1
(22) Anmeldetag: 20.12.2021
(51) Int. Cl.: B01F 23/60, B29C 64/314, B29C 64/357, B01F 35/52, B01F 33/40, B01F 35/75, B22F 12/50, B22F 12/58, B22F 10/73, B01F 25/50, B33Y 30/00, B33Y 40/00

(54) **MISCHVORRICHTUNG ZUM HERSTELLEN EINER PULVERMISCHUNG**
MIXING DEVICE FOR PRODUCING A POWDER MIXTURE
DISPOSITIF DE MÉLANGE PERMETTANT DE FABRIQUER UN MÉLANGE PULVÉRULENT

(43) Veröffentlichungstag der Anmeldung: 21.06.2023
(73) Patentinhaber: EOS GmbH Electro Optical Systems, 82152 Krailling (DE)
(72) Erfinder: REICHEL, Thomas, 82110 Germering (DE)
(74) Vertreter: Prüfer & Partner mbB Patentanwälte · Rechtsanwälte

(56) Entgegenhaltungen:
- EP-A1- 2 447 047
- DE-A1- 102010 043 166
- DE-A1- 102020 208 252
- KR-B1- 910 002 523
- US-A- 3 647 188

## Beschreibung

Die vorliegende Erfindung betrifft eine Mischvorrichtung zum Herstellen einer Pulvermischung, eine additive Herstellvorrichtung zur Herstellung eines dreidimensionalen Objekts unter Verwendung einer derartigen Pulvermischung bzw. eine additive Herstellvorrichtung mit einer derartigen Mischvorrichtung, und ein Verfahren zur Herstellung einer Pulvermischung.

Vorrichtungen und Verfahren zum additiven Herstellen eines dreidimensionalen Objekts durch schichtweises selektives Verfestigen eines Aufbaumaterials werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

In der Regel bleibt bei einem derartigen Herstellungsverfahren ein Anteil des als Aufbaumaterial verwendeten Pulvers übrig, z.B. in Form von das hergestellte Objekt umgebendem Pulver oder überschüssigem Pulver, welches bei einem Schichtauftrag durch den Beschichter einem Überlaufbehälter zugeführt wurde. Derartiges Pulver, welches bereits in einem vorhergehenden Herstellungsvorgang verwendet wurde, wird auch als Altpulver bezeichnet. Zur Steigerung der Effizienz, insbesondere der Kosteneffizienz des Herstellungsverfahrens kann es erwünscht sein, als Aufbaumaterial einen Anteil an Altpulver zu verwenden. Hierzu wird das Altpulver in der Regel mit sogenanntem Neupulver, d. h. Pulver, welches noch nicht in einem vorhergehenden Herstellungsvorgang verwendet wurde, gemischt und für einen weiteren Herstellungsvorgang als Aufbaumaterial bereitgestellt.

Auch kann es bei einem additiven Herstellungsverfahren erwünscht oder erforderlich sein, ein als Aufbaumaterial verwendetes Pulver nach bestimmten Vorgaben, beispielsweise hinsichtlich chemischer und/oder physikalischer Eigenschaften, aus verschiedenen Pulverkomponenten zu mischen.

In beiden Fällen ist es erforderlich, eine möglichst homogene Pulvermischung aus den verschiedenen Pulverkomponenten, d. h. dem Alt- und Neupulver bzw. chemisch und/oder physikalisch verschiedenen Pulverkomponenten, zu erzielen, um ein dreidimensionales Objekt mit guten, insbesondere möglichst homogenen, Bauteileigenschaften zu erhalten.

DE 10 2010 043 166 A1 beschreibt eine Vorrichtung zum Vermischen von Pulver für eine additive Herstellvorrichtung. Der Behälter, in dem das Pulver vermischt wird, umfasst eine fluiddurchlässige untere Platte und eine Rührvorrichtung in Form eines Rührwerkzeugs.

US 2009/0169664 A1 beschreibt ein System zum Mischen eines Pulvers für eine Lasersintermaschine, wobei ein Neupulver und ein Altpulver in einem Mischbehälter gemischt werden. Zum Durchmischen der Pulver werden diese in einem Kreislauf zirkuliert.

EP 2 450 177 A1 beschreibt ein Pulverbehandlungssystem für einen 3D-Drucker, wobei das System eine Mehrzahl von Pulverhaltebehältern umfasst und eine Vakuumpumpe, um Pulver zwischen den Pulverhaltebehältern zu fördern. Als Pulverbehälter sind ein Dosierbehälter vorgesehen um eine für einen Schichtauftrag ausreichende Pulvermenge zu dosieren, sowie ein externer Pulverbehälter zum Bereitstellen des Pulvers. Der externe Pulverbehälter umfasst einen Deckel und eine konische Wandung, sowie eine innenliegende Düse, durch die Pulver nach oben ausgeleitet wird.

KR 910 002 523 B1 beschreibt eine Mischvorrichtung mit einem oberen Behälter und einem unteren Behälter, die über eine Leitung in Verbindung stehen.

Die Aufgabe der vorliegenden Erfindung besteht darin, eine alternative bzw. verbesserte Mischvorrichtung bzw. ein alternatives bzw. verbessertes Verfahren zum Herstellen einer Pulvermischung für eine additive Herstellvorrichtung bereitzustellen, bei der bzw. dem insbesondere die Homogenität der Pulvermischung verbessert werden kann und/oder die bzw. das ein möglichst einfach durchführbares und/oder reproduzierbares und/oder zumindest teilweise automatisch durchführbares Mischen von Pulverkomponenten ermöglicht.

Diese Aufgabe wird gelöst durch eine Mischvorrichtung gemäß Anspruch 1, eine additive Herstellvorrichtung gemäß Anspruch 12 und ein Verfahren gemäß Anspruch 13. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtungen weitergebildet sein oder umgekehrt, bzw. können die Merkmale der Vorrichtungen auch jeweils untereinander zur Weiterbildung genutzt werden.

Eine erfindungsgemäße Mischvorrichtung dient zum Herstellen einer Pulvermischung aus einer ersten Pulverkomponente und zumindest einer zweiten Pulverkomponente für eine additive Herstellvorrichtung, in der ein dreidimensionales Objekt durch schichtweises selektives Verfestigen eines Aufbaumaterials, welches die Pulvermischung umfasst, herstellbar ist. Die Mischvorrichtung umfasst einen ersten Behälter zur Aufnahme der ersten und/oder der zweiten Pulverkomponente, wobei an einer unteren Begrenzung des ersten Behälters eine Ausgabeöffnung zum Ausgeben der ersten und/oder zweiten Pulverkomponente vorgesehen ist, und einen zweiten Behälter zur Aufnahme der ersten und/oder der zweiten Pulverkomponente, wobei der zweite Behälter zu einer Oberseite hin zumindest abschnittsweise offen ausgebildet ist.

Im Folgenden wird die Pulvermischung als Mischung der ersten und zweiten Pulverkomponente beschrieben. Die Erfindung ist jedoch nicht auf die Verwendung zweier Pulverkomponenten beschränkt; vielmehr können auch drei oder mehr Pulverkomponenten zur Verwendung mit der Mischvorrichtung vorgesehen sein, insbesondere durch diese gemischt werden. Die erste und zweite Pulverkomponente und etwaige weitere Pulverkomponenten unterscheiden sich vorzugsweise in ihren chemischen und/oder physikalischen Eigenschaften voneinander. Beispielsweise kann die erste Pulverkomponente ein Altpulver sein, welches bereits in einem vorhergehenden Bauvorgang als unverfestigtes und/oder überschüssiges Pulver übriggeblieben ist, und die zweite Pulverkomponente kann ein Neupulver sein.

Die untere Begrenzung des ersten bzw. des zweiten Behälters ist vorzugsweise ein Behälterboden des jeweiligen Behälters. Vorzugsweise ist die untere Begrenzung des ersten bzw. des zweiten Behälters gegenüberliegend einem Behälterdeckel des ersten Behälters (s.u.) bzw. der Oberseite des zweiten Behälters vorgesehen.

Weiter umfasst die Mischvorrichtung zumindest eine Fluidisierungszone zum Einleiten eines Gases in die Mischvorrichtung. Der erste Behälter (optional zusätzlich auch der zweite Behälter) weist zumindest eine Fluidisierungzone auf. Die Fluidisierungszone ist ein Abschnitt im ersten (bzw. auch im zweiten) Behälter, in dem die erste und/oder die zweite Pulverkomponente mit einem Gas beströmt wird, das durch ein Gaseinleitelement in den ersten (bzw. in den zweiten) Behälter zugeführt wird. Vorzugsweise umfasst das Gaseinleitelement ein Gitter und/oder eine poröse Platte, die zwischen der Behälterwandung und dem Auslass des Gaseinleitelements angeordnet ist. Sowohl das Gitter als auch die poröse Platte können beispielweise aus Kunststoff oder aus Metall sein. Das Gitter und/oder die poröse Platte können an einer Behälterwandung des jeweiligen Behälters anliegen. Insbesondere können das Gitter und/oder die poröse Platte an der jeweiligen Behälterwandung befestigt sein. Die Fluidisierungszone(n) ist/sind vorzugsweise jeweils durch einen Hohlraum gebildet, der durch ein Gaseinleitelement, insbesondere ein Gitter und/oder eine poröse Platte, von dem ersten bzw. zweiten Behälter getrennt ist. Weiter bevorzugt ist das Gitter bzw. die poröse Platte viereckig. Insbesondere kann das Gitter bzw. die poröse Platte eine Reihe von, bevorzugt parallelen, viereckigen Spalten umfassen. Die Hauptrichtung der Spalte kann einen bestimmten Winkel zur Hauptrichtung des viereckigen Gitters bzw. der viereckigen porösen Platte aufweisen. Insbesondere können die Spalte parallel oder senkrecht zur Hauptrichtung des Gitters bzw. der porösen Platten sein.

Die Mischvorrichtung umfasst weiter eine Pulverleitung, die an die Ausgabeöffnung des ersten Behälters anschließt und in den zweiten Behälter hineingeführt ist. Die Pulverleitung ist vorzugsweise im Wesentlichen außerhalb des ersten Behälters vorgesehen. "Im Wesentlichen außerhalb des ersten Behälters" meint dabei, dass die Pulverleitung über den Großteil ihrer Leitungslänge außerhalb des ersten Behälters vorgesehen ist, und insbesondere nur der in den zweiten Behälter hineingeführte Abschnitt der Pulverleitung innerhalb des ersten Behälters vorgesehen ist.

Die Pulverleitung bildet somit, beispielsweise als eine Rohrleitung, eine pulverführende Verbindung der Ausgabeöffnung des ersten Behälters mit dem Innenraum des zweiten Behälters. Dies ermöglicht beispielweise eine Förderung der ersten und/oder zweiten Pulverkomponente in einem Kreislauf, wobei beispielsweise die Pulverkomponente(n) durch Fluidisierung über die zumindest abschnittsweise offen ausgebildete Oberseite des zweiten Behälters aus diesem austritt bzw. austreten und in den ersten Behälter gelangt bzw. gelangen und von dort wiederum über die Pulverleitung zurück in den zweiten Behälter. Diese Förderung in einem Kreislauf kann beispielsweise zu einer guten Durchmischung der beiden Pulverkomponenten führen. Insgesamt kann somit mit der erfindungsgemäßen Mischvorrichtung eine Vorrichtung zum Mischen verschiedener Pulverkomponenten bereitgestellt sein, mit der ein Mischvorgang auf einfache Art und Weise und/oder zumindest teilweise automatisch und/oder möglichst reproduzierbar durchführbar ist und/oder mit der eine möglichst homogene Pulvermischung herstellbar ist.

Der zweite Behälter ist innerhalb des ersten Behälters angeordnet. Somit ist gemäß dieser bevorzugten Ausbildung der erste Behälter als ein Außenbehälter und der zweite Behälter als ein Innenbehälter ausgebildet, wobei der zweite Behälter über den ersten Behälter beispielsweise auch überstehen kann. Damit ist es beispielsweise möglich, eine möglichst kompakte, d. h. platzsparende, Mischvorrichtung bereitzustellen und/oder den Betrieb und/oder Aufbau der Mischvorrichtung möglichst einfach zu gestalten, da das aus dem zweiten Behälter durch Fluidisierung austretende Pulver direkt in den ersten Behälter gelangt und somit beispielsweise keine weiteren strukturellen Elemente, wie z.B. Pulverleitungen, als zusätzliche Verbindung zwischen den beiden Behältern erforderlich sind.

Weiter bevorzugt liegt der zweite Behälter zumindest teilweise am ersten Behälter an. Noch weiter bevorzug ist der zweite Behälter an dem ersten Behälter zumindest teilweise befestigt. Beispielweise kann zumindest eine Wandung des zweiten Behälters, insbesondere vollständig oder teilweise, an einer Wandung des ersten Behälters anliegen, vorzugsweise befestigt werden bzw. der erste und der zweite Behälter teilen sich über eine Teilfläche einen gemeinsamen Wandungsbereich. Darüber hinaus können strukturelle Elemente zur Befestigung des zweiten im ersten Behälter vorgesehen sein, welche die beiden Behälter miteinander verbinden. In einer bevorzugten Ausführungsform ist der zweite Behälter von dem ersten Behälter zumindest in einer Raumrichtung beabstandet. Durch die Beabstandung der beiden Behälter voneinander in zumindest einer Raumrichtung ist eine verbesserte Durchmischung der beiden Pulverkomponenten möglich. Vorzugsweise sind zusätzlich die Fluidisierungszone/n dort angeordnet, wo die Behälter voneinander beabstandet sind. Diese Anordnung ermöglicht beispielweise, eine verbesserte Durchmischung der beiden Pulverkomponenten und/oder eine gute Förderung im Kreislauf (s.o.) zu erzielen.

Vorzugsweise ist der erste Behälter zu einer Oberseite hin durch einen Behälterdeckel verschließbar und der zweite Behälter ist innerhalb des ersten Behälters so vorgesehen, dass eine obere Begrenzung des zweiten Behälters von dem Behälterdeckel des ersten Behälters beabstandet ist. Die obere Begrenzung des zweiten Behälters kann beispielsweise als ein Behälterrand des zweiten Behälters ausgebildet sein. Weiter bevorzugt ist die Pulverleitung durch den Behälterdeckel des ersten Behälters in den zweiten Behälter hineingeführt.

Dadurch, dass der zweite Behälter zu einer Oberseite hin zumindest abschnittsweise offen ausgebildet ist und seine obere Begrenzung vom Behälterdeckel des ersten Behälters beabstandet ist, ist es beispielsweise möglich, dass die erste und/oder die zweite Pulverkomponente, über die obere Begrenzung des zweiten Behälters austreten und in den ersten Behälter gelangen kann. Dies kann dadurch erleichtert oder ermöglicht werden, dass die erste und/oder die zweite Pulverkomponente durch das Einleiten des Gases in einen fluidähnlichen Zustand versetzt wird. Ferner kann das Versetzen des Pulvers in einen fluidähnlichen Zustand durch eine induzierte Befeuchtung der ersten und/oder der zweiten Pulverkomponente schneller und/oder vollständiger durchgeführt werden. Das Versetzen des Pulvers in einen fluidähnlichen Zustand kann beispielsweise eine Förderung des Pulvers in einem Kreislauf, d. h. von dem zweiten Behälter in den ersten Behälter und von dort durch die Pulverleitung wieder in den zweiten Behälter, verbessern und somit zu einer besonders guten, insbesondere homogenen, Durchmischung des Pulvers bzw. Vermischen der zwei oder mehr Pulverkomponenten führen.

Vorzugsweise ist an der unteren Begrenzung, beispielsweise einem Behälterboden, des zweiten Behälters eine Pulveröffnung zur Ausgabe der ersten und/oder der zweiten Pulverkomponente vorgesehen. Damit ist es beispielsweise möglich, beim Zuführen des (gemischten) Pulvers zur additiven Herstellvorrichtung oder einem Vorratsbehälter das in der Mischvorrichtung vorhandene Pulver möglichst vollständig zu entnehmen, d.h. insbesondere auch den zweiten Behälter möglichst vollständig zu entleeren.

Weiter umfasst die Mischvorrichtung vorzugsweise zumindest eine erste Verschlusseinrichtung, die dazu ausgebildet ist, die Ausgabeöffnung des ersten Behälters zu verschließen und/oder freizugeben. Alternativ oder zusätzlich umfasst die Mischvorrichtung vorzugsweise zumindest eine zweite Verschlusseinrichtung, die dazu ausgebildet ist, die Pulveröffnung des zweiten Behälters zu verschließen und/oder freizugeben. Die erste und/oder zweite Verschlusseinrichtung können beispielsweise als Pulverventil und/oder als Quetschventil und/oder als Kegelventil ausgebildet sein. Weiter bevorzugt sind die erste Verschlusseinrichtung und die zweite Verschlusseinrichtung ausgebildet, die jeweilige Ausgabeöffnung bzw. Pulveröffnung in Abhängigkeit von einem Betriebszustand der jeweils anderen Verschlusseinrichtung und/oder in Abhängigkeit von einem definierten Betriebsmodus der Mischvorrichtung zu verschließen und/oder freizugeben. Ein Betriebszustand bezeichnet insbesondere einen Zustand, in dem die Ausgabeöffnung oder Pulveröffnung durch die jeweiligen Verschlusseinrichtungen verschlossen oder freigegeben, d. h. geöffnet, ist. Insbesondere kann Pulver aus dem jeweiligen Behälter durch die Ausgabeöffnung bzw. Pulveröffnung austreten, wenn die jeweilige Öffnung freigegeben ist. Entsprechend ist kein Pulveraustritt durch die jeweilige Öffnung möglich, wenn diese durch die jeweilige Verschlusseinrichtung verschlossen ist. Weiter bevorzugt ist die erste und/oder zweite Verschlusseinrichtung dazu ausgebildet, einen Pulverstrom (durchströmendes Pulvervolumen pro Zeiteinheit) dadurch hindurch einzustellen. Eine koordinierte Steuerung der Ausgabeöffnung und der Pulveröffnung trägt zur Realisierung eines Kreislaufs der Pulvermischung bei. Die erste und/oder die zweite Pulverkomponente und/oder die Pulvermischung können im Kreislauf gefördert werden. Beispielweise kann die erste und/oder die zweite Pulverkomponente und/oder die Pulvermischung von dem zweiten Behälter in den ersten Behälter und von dort durch die Pulverleitung wieder in den zweiten Behälter im Kreislauf gefördert werden. Eine Förderung im Kreislauf führt zu einer besonders guten, insbesondere homogenen, Durchmischung der zwei oder mehr Pulverkomponenten. Insgesamt ermöglichen die Verschlusseinrichtungen somit beispielsweise die Durchführung unterschiedlicher Vorgänge in bzw. mittels der Mischvorrichtung.

Vorzugsweise ist in Hinblick auf die Verschlusseinrichtungen bei der Mischvorrichtung zumindest einer der folgenden Betriebszustände vorgesehen:
- ein erster Zustand, bei dem die Ausgabeöffnung des ersten Behälters freigegeben und die Pulveröffnung des zweiten Behälters verschlossen ist;
- ein zweiter Zustand, bei dem die Ausgabeöffnung des ersten Behälters verschlossen und die Pulveröffnung des zweiten Behälters freigegeben ist;
- ein dritter Zustand, bei dem die Ausgabeöffnung des ersten Behälters und die Pulveröffnung des zweiten Behälters beide verschlossen sind (erste Variante) oder beide freigegeben sind (zweite Variante).

Vorzugsweise sind die Betriebszustände der Mischvorrichtung verschiedenen Betriebsmodi der Mischvorrichtung zugeordnet. Beispielsweise kann ein Betriebsmodus "Füllen" vorgesehen sein, in dem die erste und/oder zweite Pulverkomponente dem ersten und/oder zweiten Behälter zugeführt werden, d. h. der bzw. die Behälter befüllt wird/werden. In diesem Betriebsmodus ist die Ausgabeöffnung des ersten Behälters vorzugsweise verschlossen, sodass kein Pulver durch diese austritt. Die Pulveröffnung des zweiten Behälters kann dabei wahlweise geöffnet, d.h. freigegeben, sein, um einen Pulveraustausch zwischen dem zweiten und den ersten Behälter zu erlauben. Dies entspricht dem obigen zweiten Betriebszustand. Alternativ kann die Pulveröffnung des zweiten Behälters ebenfalls verschlossen sein. In diesem Fall wird beispielweise nur der zweite Behälter befüllt. Dies entspricht der obigen ersten Variante des dritten Betriebszustands.

Weiter kann beispielsweise ein Betriebsmodus "Mischen" der Mischvorrichtung vorgesehen sein, in dem die erste und zweite Pulverkomponente miteinander vermischt werden. In diesem Betriebsmodus ist die Ausgabeöffnung des ersten Behälters bevorzugt verschlossen und die Pulveröffnung des zweiten Behälters bevorzugt geöffnet. Die erste und/oder die zweite Pulverkomponente fließt/fließen vom zweiten in den ersten Behälter und bleibt/bleiben im ersten Behälter (solange die Ausgabeöffnung des ersten Behälters verschlossen ist). Dies entspricht dem obigen zweiten Betriebszustand.

Das Mischen erfolgt vorzugsweise in der Fluidisierungzone bzw. in den Fluidisierungzonen des ersten und/oder des zweiten Behälters. Das Mischen kann durch die Einleitung eines Gases in die Fluidisierungszone(n) realisiert oder erleichtert werden. Alternativ oder zusätzlich wird das Mischen durch eine geeignete Neigung einer unteren Begrenzung des ersten und/oder des zweiten Behälters verbessert und/oder realisiert. In diesem Betriebsmodus kann optional ein Fluidisierungsgrad der ersten und/oder der zweiten Komponente bzw. der Pulvermischung ermittelt werden. Der Fluidisierungsgrad kann basierend auf der Viskosität und/oder auf dem Feuchtigkeitsgehalt und/oder auf der Temperatur der ersten und/oder der zweiten Pulverkomponente bzw. der Pulvermischung bestimmt werden. Die Ausgabe- und/oder die Pulveröffnung werden beispielweise freigegeben, wenn die erste und/oder zweite Pulverkomponente bzw. die Pulvermischung einen bestimmten Fluidisierungsgrad erreicht hat bzw. haben. Die Freigabe der Pulveröffnung des zweiten Behälters bei einer geöffneten Ausgabeöffnung des ersten Behälters entspricht der zweiten Variante des obigen dritten Betriebszustands. Bei der Erreichung eines bestimmten Fluidisierungsgrads kann beispielweise vom Betriebsmodus "Mischen" zum Betriebsmodus "Fördern" umgeschaltet werden.

Weiter kann beispielsweise ein Betriebsmodus "Fördern" der Mischvorrichtung vorgesehen sein, in dem die erste und/oder zweite Pulverkomponente bzw. die Pulvermischung der additiven Herstellvorrichtung und/oder einem Vorratsbehälter zugeführt werden. In diesem Betriebsmodus sind vorzugsweise sowohl die Ausgabeöffnung, als auch die Pulveröffnung freigegeben, um beispielsweise eine möglichst vollständige Entleerung der Mischvorrichtung zu ermöglichen. Dies entspricht obiger zweiter Variante des dritten Betriebszustandes.

Weitere Betriebsmodi entstehen aus der Kombination der Betriebsmodi "Füllen", "Mischen" und "Fördern". Beispielweise können das "Mischen" und das "Füllen" derart kombiniert werden, dass der zweite Behälter mit zumindest einer Pulverkomponente befüllt wird, während die Pulverkomponenten im ersten Behälter gemischt werden. Dabei kann die Pulveröffnung des zweiten Behälters geöffnet sein und die Pulverkomponente(n) gelangt/gelangen durch den zweiten Behälter in den ersten Behälter (dies entspricht dem zweiten obigen Betriebszustand). Alternativ kann die Pulveröffnung des zweiten Behälters verschlossen sein. Die Ausgabeöffnung kann dabei auch weiter verschlossen sein (dies entspricht der ersten Variante des dritten obigen Betriebszustands). Bei geschlossener Pulveröffnung wird der zweite Behälter überfüllt und die Pulverkomponente(n) gelangt/gelangen in den ersten Behälter über die Ablenkelemente des zweiten Behälters. Ferner ist es möglich, den Betriebsmodus "Füllen" und den Betriebsmodus "Mischen" derart zu kombinieren, dass die erste und/oder die zweite Pulverkomponente durch eine Anpassung der Austrittsgeschwindigkeit der Pulverkomponente(n) durch die Pulveröffnung des zweiten Behälters und der Füllgeschwindigkeit in den zweiten Behälter gemischt werden. Wenn die Füllgeschwindigkeit größer als die Austrittgeschwindigkeit ist, findet teilweise ein Rücklauf der Pulverkomponente(n) an der Pulveröffnung des zweiten Behälters statt und dadurch kann das Mischen der Pulverkomponente(n) realisiert werden. Das Mischen der Pulverkomponenten durch eine relative Anpassung der Austrittgeschwindigkeit und der Füllgeschwindigkeit wird bevorzugt von einer trichterförmigen Gestaltung der Pulveröffnung erleichtert. Insgesamt werden die Betriebsmodi vorzugsweise so kombiniert, dass die Mischung und die Bereitstellung der ersten und/oder der zweiten Pulverkomponente und/oder der Pulvermischung im Kreislauf erfolgen. Die Betriebsmodi sind vorzugweise durch bestimmte Betriebsparameter charakterisiert. Beispielweise kann bei dem Betriebsmodus "Füllen" eine Einleitgeschwindigkeit des Pulvers durch die Pulverleitung als Betriebsparameter bestimmt werden. Dies entspricht der Festlegung der Füllgeschwindigkeit des zweiten Behälters. Bei dem Betriebsmodus "Mischen" kann ein Gasdruck, mit dem das Gas in die Fluidisierungzone(n) eingeleitet wird, als Betriebsparameter bestimmt werden. Darüber hinaus kann die Einleitung des Gases in Zeitintervallen erfolgen und getaktet sein, wobei die Zeitintervalle sowohl in Hinsicht auf Dauer und Frequenz als Betriebsparameter verstanden werden. Weitere Betriebsparameter im Betriebsmodus "Mischen" können die Dauer der Zeitintervalle, in denen das Gas eingeleitet wird, und der Takt zwischen einem Zeitintervall und dem nächsten sein. Beim Betriebsmodus "Fördern" können eine Austrittgeschwindigkeit des Pulvers aus dem ersten und/oder von dem zweiten Behälter Betriebsparameter sein. Die Betriebsparameter sind nicht zwingend mit einem Betriebsmodus gekoppelt, sondern können für verschiedene Betriebsmodi bestimmt werden. Die Austrittgeschwindigkeit aus dem zweiten Behälter kann beispielweise auch ein Betriebsparameter im Betriebsmodus "Mischen" sein. Darüber hinaus können die Einleitgeschwin-' digkeit des Pulvers durch die Pulverleitung bzw. die Füllgeschwindigkeit des ersten und/oder des zweiten Behälters Betriebsparameter auch im Betriebsmodus "Fördern" sein, insbesondere wenn das "Fördern" und das "Füllen" im Kreislauf erfolgen.

Vorzugsweise ist bzw. sind ein unterer Bereich des ersten Behälters, insbesondere dessen untere Begrenzung, und/oder der untere Bereich des zweiten Behälters, insbesondere dessen untere Begrenzung, zumindest abschnittsweise trichterförmig ausgebildet. Damit kann beispielsweise eine Ausgabe der ersten und/oder zweiten Pulverkomponente durch die Ausgabeöffnung des ersten Behälters bzw. die Pulveröffnung des zweiten Behälters vereinfacht werden und/oder das Pulver kann im Wesentlichen vollständig aus dem jeweiligen Behälter entnommen werden. Insbesondere kann durch die trichterförmige Ausgestaltung beispielsweise verhindert werden, dass sich schlecht durchmischte Bereiche in dem jeweiligen Behälter ausbilden. Darüber hinaus kann die Durchmischung der Pulverkomponente durch eine geeignete trichterförmige Ausgestaltung, insbesondere durch eine geeignete Neigung der unteren trichterförmig ausgebildeten Begrenzung des ersten und/oder des zweiten Behälters, realisiert oder erleichtert werden. Die trichterförmige Ausgestaltung kann beispielweise so gebaut sein, dass in dem unteren Bereich des ersten und/oder des zweiten Behälters zumindest teilweise ein Rücklauf der ersten und/oder der zweiten Pulverkomponente stattfindet. Ein Rücklauf kann auch durch die Kombination einer geeigneten (trichterförmigen) Ausgestaltung des unteren Bereichs des ersten und/oder des zweiten Behälters und einer relativen Anpassung der Austrittsgeschwindigkeit aus der Pulveröffnung bzw. aus der Ausgabeöffnung und der Füllgeschwindigkeit des ersten und/oder des zweiten Behälters realisiert und/oder erleichtert werden.

Vorzugsweise ist ein unterer Bereich des ersten Behälters, insbesondere die Ausgabeöffnung, an ein Fördermodul anschließbar oder ist daran angeschlossen. Das Fördermodul kann insbesondere eine Pumpe, vorzugsweise eine pneumatische Pulverpumpe, umfassen zum Fördern der ersten und/oder zweiten Pulverkomponente. Das Anschließen der Ausgabeöffnung an das Fördermodul kann insbesondere ein Anschließen mittels der Pulverleitung meinen. Die Pumpe ist vorzugsweise zur stoßweisen Förderung des Pulvers ausgebildet. Alternativ kann die Pumpe auch zu einer kontinuierlichen Förderung des Pulvers ausgebildet sein. Alternativ zu der integralen Bereitstellung eines Fördermoduls mit der Mischvorrichtung kann dieses auch separat von der Mischvorrichtung, d. h. als ein externes Fördermodul, vorgesehen sein. Beispielsweise kann das Fördermodul Bestandteil einer Dockingstation der Herstellvorrichtung sein, wobei die Dockingstation zur Aufnahme der Mischvorrichtung ausgebildet ist.

Vorzugsweise ist an dem zweiten Behälter zumindest ein Ablenkelement vorgesehen, welches sich im Wesentlichen von einer Behälterwandung und/oder der oberen Begrenzung des zweiten Behälters in Richtung zumindest einer nächstgelegenen Wandung des ersten Behälters erstreckt. Weiter bevorzugt ist das Ablenkelement ausgehend von der Behälterwandung bzw. der oberen Begrenzung des zweiten Behälters in Richtung der unteren Begrenzung des ersten Behälters und/oder in Richtung der Ausgabeöffnung des ersten Behälters geneigt. Das Ablenkelement kann beispielsweise ein gleichmäßigeres Ausfließen des in dem zweiten Behälter fluidisierten und aus diesem austretenden Pulver bewirken, insbesondere durch Ablenken des aus dem zweiten Behälter austretenden Pulvers in Richtung der Wandung des ersten Behälters, was beispielsweise die Durchmischung der Pulver verbessern kann. Insbesondere kann durch das Bereitstellen des Ablenkelements einem Kernfluss des geförderten Pulvers innerhalb des ersten und/oder zweiten Behälters entgegengewirkt werden. Vorzugsweise erstreckt sich das Ablenkelement im Wesentlichen über den gesamten Umfang des zweiten Behälters. Dies meint, dass das Ablenkelement den zweiten Behälter in einer Schnittebene, insbesondere einer horizontalen Schnittebene, im Wesentlichen lückenlos umgibt.

Vorzugsweise kann bzw. können der erste und/oder zweite Behälter manuell und/oder teilautomatisch und/oder automatisch befüllt werden, d.h. ist bzw. sind manuell und/oder teilautomatisch und/oder automatisch befüllbar, insbesondere über die Pulverleitung. Zu diesem Zweck kann die in den zweiten Behälter hineingeführte Pulverleitung beispielsweise eine Einfüllöffnung außerhalb der Behälter aufweisen, über die die erste und/oder zweite Pulverkomponente beispielsweise aus einem externen Pulvervorrat zugeführt wird, oder die Pulverleitung selbst kann mit einem derartigen externen Pulvervorrat verbunden sein bzw. werden, oder eine separat bereitgestellte Zuführleitung kann in den ersten und/oder zweiten Behälter hineingeführt sein oder, beispielsweise über ein (Pulver-)Ventil, mit der Pulverleitung verbunden sein. Vorzugsweise sind bei einem (teil-)automatischen Befüllen des ersten und/oder zweiten Behälters Sensoren zur Erfassung eines Pulverfüllstands in dem jeweiligen Behälter vorgesehen, um beispielsweise eine definierte Pulvermenge bzw. Füllstandshöhe in dem jeweiligen Behälter und/oder ein definiertes Mischverhältnis der Pulverkomponenten sicherstellen zu können. Alternativ oder zusätzlich kann ein, insbesondere manuelles, Befüllen des oder der Behälter(s) durch Öffnen des Behälterdeckels des ersten Behälters erfolgen und der Pulverfüllstand beispielsweise durch ein Sichtfenster in dem ersten und/oder zweiten Behälter überprüft werden. Das hier beschriebene Befüllen entspricht vorzugsweise dem oben beschriebenen Betriebsmodus "Füllen" der Mischvorrichtung.

Alternativ oder zusätzlich ist die Pulverleitung vorzugsweise mit einer Entnahmeleitung zur Entnahme der Pulvermischung bzw. der ersten und/oder zweiten Pulverkomponente aus der Mischvorrichtung verbunden. Die Entnahmeleitung kann insbesondere in die additive Herstellvorrichtung hineingeführt sein, beispielsweise zu einem Vorratsbehälter zur Aufnahme des pulverförmigen Aufbaumaterials, welches bei der Herstellung eines dreidimensionalen Objekts verwendet wird. Die Entnahmeleitung, beispielsweise eine Rohrleitung, kann beispielsweise über ein Ventil mit der Pulverleitung der Mischvorrichtung in Verbindung stehen. Alternativ kann die Entnahmeleitung beispielsweise direkt an die Ausgabeöffnung des ersten Behälters anschließbar sein. Ein Vorgang der Entnahme der Pulvermischung aus der Mischvorrichtung ist vorzugsweise ein oben beschriebener Betriebsmodus "Fördern" der Mischvorrichtung.

Vorzugsweise umfasst die Mischvorrichtung weiter eine Befeuchtungseinrichtung zur Befeuchtung der ersten und/oder zweiten Pulverkomponente, beispielweise in der Pulverleitung. Die Befeuchtungseinrichtung kann beispielsweise einen Behälter mit einer Flüssigkeit umfassen, in dem sich ein Zerstäuber befindet, und einen Pulverbehälter, in dem sich das zu befeuchtende Pulver befindet. In dem Pulverbehälter ist beispielsweise eine Fluidisierplatte angeordnet, durch die ein Gas in das Pulver eingeleitet wird. Das Gas wird dabei vorzugsweise in einem Kreislauf geführt, wobei es bei Durchleiten durch den die Flüssigkeit umfassenden Behälter befeuchtet wird, d. h. der Feuchtigkeitsgehalt des Gases erhöht wird, und beim Durchleiten durch den Pulverbehälter diese Feuchtigkeit wieder an das Pulver abgibt. Vorzugsweise ist in dem Kreislauf, in dem das Gas geleitet wird, weiter ein Filtersystem zum Reinigen des Gases von Pulverpartikeln vorgesehen. Eine Pulverkomponente, die in der Mischvorrichtung gemischt wird, kann zumindest teilweise aus dem wie oben beschrieben befeuchteten Pulver bestehen. Der Pulverbehälter, in dem die Befeuchtung des Pulvers stattfindet, kann mit der Mischvorrichtung, beispielweise mit der Pulverleitung der Mischvorrichtung, verbunden oder verbindbar sein.

Alternativ oder zusätzlich zu der Bereitstellung einer Befeuchtungseinrichtung kann das Gas, welches durch die zumindest eine der Fluidisierungszonen eingeleitet wird, einen bestimmten Feuchtigkeitsgehalt aufweisen und somit zur Befeuchtung der ersten und/oder der zweiten Pulverkomponente bzw. der Pulvermischung dienen bzw. der ersten und/oder der zweite Behälter der Mischvorrichtung können als ein oben beschriebener Pulverbehälter einer Befeuchtungseinrichtung ausgebildet sein. Durch die Befeuchtung des Pulvers kann beispielsweise ein Austrag und/oder eine elektrostatische Aufladung von kleinen Pulverpartikeln während dem Mischen und Fördern der Pulverkomponenten verhindert oder zumindest verringert werden. Die elektrische Aufladung kann die Mischbarkeit und/oder die Fluidität der Pulverkomponenten und/oder der Pulvermischung erhöhen.

Optional umfasst die Mischvorrichtung eine Sensoranordnung, die ausgebildet ist, einen Fluidisierungsgrad zumindest einer der Pulverkomponenten und/oder der Pulvermischung zu ermitteln. Weiter bevorzugt ist die Sensoranordnung mit einer Übermittlungseinheit verbunden, die den gemessenen Fluidisierungsgrad übermitteln kann. Diese Übermittlungseinheit kann in der Sensoreinheit integriert sein bzw. kann die Sensoranordnung zusätzlich dazu geeignet sein, den ermittelten Fluidisierungsgrad zu übermitteln. Der Fluidisierungsgrad kann basierend auf einer Messung der Viskosität und/oder des Feuchtigkeitsgehalts und/oder der Temperatur der Pulverkomponenten und/oder der Pulvermischung ermittelt werden. Dementsprechend kann die Sensoranordnung ein Viskosimeter (Rheometer) und/oder einen Feuchtigkeitssensor und/oder einen Temperatursensor umfassen.

Ferner umfasst die Mischvorrichtung optional eine Steuereinheit. Die Steuereinheit ist mit zumindest einer, bevorzugt mehreren, besonders bevorzugt mit allen, anderen Komponenten der Mischvorrichtung verbunden. Insbesondere ist die Steuereinheit bevorzugt mit der Sensoranordnung verbunden. Der Steuereinheit kann beispielweise (von der Übermittlungseinheit oder von der Sensoranordnung) der Fluidisierungsgrad übermittelt werden. Die Steuereinheit kann außerdem dazu geeignet sein, den ermittelten Fluidisierungsgrad mit einem bestimmten Schwellenwert zu vergleichen oder die relative Änderung des Fluidisierungsgrads über ein bestimmtes Zeitintervall berechnen. Abhängig vom Fluidisierungsgrad, insbesondere abhängig vom Ergebnis aus diesem Vergleich bzw. aus dieser Berechnung kann die Steuereinheit Befehle generieren und diese den anderen Komponenten übermitteln, sodass die Betriebsparameter der anderen Komponenten geändert werden.

Vorzugsweise ist die Mischvorrichtung bewegbar, insbesondere verfahrbar, ausgebildet. Dadurch ist es beispielsweise möglich, mittels der Mischvorrichtung Pulvermischungen für verschiedene additive Herstellvorrichtungen bereitzustellen, da die Mischvorrichtung auf einfache Art und Weise zu der jeweiligen Herstellvorrichtung gebracht werden kann.

Eine erfindungsgemäße additive Herstellvorrichtung dient zur Herstellung eines dreidimensionalen Objekts durch schichtweises selektives Verfestigen eines Aufbaumaterials. Das Aufbaumaterial umfasst eine von einer oben beschriebenen Mischvorrichtung bereitgestellte Pulvermischung. Alternativ oder zusätzlich weist die Herstellvorrichtung eine oben beschriebene Mischvorrichtung auf und/oder ist mit dieser verbunden. Damit sind die oben beschriebenen Wirkungen der Mischvorrichtung beispielsweise auch bei der Verwendung der Pulvermischung in einer additiven Herstellvorrichtung bzw. in einem additiven Herstellungsverfahren erzielbar.

Ein erfindungsgemäßes Verfahren dient zur Herstellung einer Pulvermischung aus einer ersten Pulverkomponente und zumindest einer zweiten Pulverkomponente in einer Mischvorrichtung. In dem Verfahren wird bzw. ist die erste und/oder die zweite Pulverkomponente durch einen, d. h. in einem, ersten Behälter aufgenommen, wobei an einer unteren Begrenzung des ersten Behälters eine Ausgabeöffnung zum Ausgeben der ersten und/oder zweiten Pulverkomponente vorgesehen ist, und die erste und/oder die zweite Pulverkomponente wird bzw. ist durch einen, d. h. in einem, zweiten Behälter aufgenommen, wobei der zweite Behälter zu einer Oberseite hin zumindest abschnittsweise offen ausgebildet ist. Der erste Behälter weist zumindest eine Fluidisierungszone auf zum Einleiten eines Gases in den ersten Behälter und die Mischvorrichtung umfasst weiter eine Pulverleitung, die an die Ausgabeöffnung des ersten Behälters anschließbar ist bzw. angeschlossen ist und in den zweiten Behälter hineinführbar ist bzw. hineingeführt ist. Damit ist beispielsweise ein Verfahren zur Herstellung einer Pulvermischung bereitgestellt, mit dem dieselben Wirkungen erzielt werden können wie in der oben beschriebenen Mischvorrichtung. Es sei hier nochmals bemerkt, dass das Verfahren auch mit mehr als zwei Pulverkomponenten durchführbar ist. Auch der zweite Behälter kann eine Fluidisierungszone aufweisen, wie oben ausführlich beschrieben.

Vorzugsweise umfasst das Verfahren zumindest einen der folgenden Schritte, vorzugsweise alle folgenden Schritte:
a) Einleiten eines Gases durch zumindest eine Fluidisierungszone in den ersten Behälter und optional durch zumindest eine andere Fluidisierungszone in den zweiten Behälter;
b) manuelles oder und/oder teilautomatisches und/oder automatisches Einfüllen der ersten und/oder zweiten Pulverkomponente in den ersten und/oder zweiten Behälter;
c) Mischen der ersten und zweiten Pulverkomponente aus dem ersten und/oder zweiten Behälter insbesondere in Kombination mit Schritt a);
d) Ausleiten der ersten und/oder zweiten Pulverkomponente durch die Ausgabeöffnung des ersten Behälters aus dem ersten Behälter über die Pulverleitung in die additive Herstellvorrichtung und/oder einen Vorratsbehälter insbesondere in Kombination mit Schritt a).

Optional umfasst das Verfahren zusätzlich zu den Schritten von a) bis d) zumindest einen der folgenden weiteren Schritte, vorzugweise alle folgenden weiteren Schritte:
e) Ermitteln des Fluidisierungsgrads der ersten und/oder zweiten Pulverkomponente und
f) Steuern der Betriebsparameter zum Mischen der ersten und/oder der zweiten Komponente in Abhängigkeit vom ermittelten Fluidisierungsgrad.

Die Schritte von a) bis f) sind von den Betriebsparametern, durch die die Betriebsmodi charakterisiert werden, ebenfalls charakterisiert. Beispielweise ist das Einleiten des Gases in die Fluidisierungszonen(n) durch einen Gasdruck, mit dem das Gas eingeleitet wird, durch Zeitintervallen, in denen das Gas eingeleitet wird, und durch einen Takt zwischen diesen Zeitintervallen charakterisiert. Das Einfüllen (Schritt b) wird beispielweise durch die Einleitgeschwindigkeit der Pulverkomponenten und/oder der Pulvermischung durch die Pulverleitung bzw. durch die Füllgeschwindigkeit des ersten und/oder des zweiten Behälters charakterisiert. Das Fördern (Schritt d) wird durch die Austrittgeschwindigkeit der Pulverkomponenten und/oder der Pulvermischung durch die Ausgabeöffnung des ersten Behälters bzw. durch die Pulveröffnung des zweiten Behälters charakterisiert. Insbesondere wenn die Pulvermischung im Kreislauf erfolgt, wird der Schritt d) auch von der Füllgeschwindigkeit des ersten und/oder des zweiten Pulverbehälters charakterisiert. Das Mischen (Schritt c) ist beispielweise durch ein bestimmtes Zeitintervall, in dem das Mischen durchgeführt wird, charakterisiert. Die Betriebsparameter, durch die das Einleiten eines Gases (Schritt a) charakterisiert wird, können auch das Mischen (Schritt c), insbesondere wenn die Durchmischung der Pulverkomponente durch das Einleiten eines Gases realisiert oder erleichtert wird. Die Austrittsgeschwindigkeit und die Füllgeschwindigkeit (Betriebsparameter des Schritts d und des Schritts b) können auch das Mischen (Schritt c) charakterisieren.

Das Einleiten eines Gases durch die erste und/oder zweite Fluidisierungszone im Schritt a) wird vorzugsweise zumindest zeitweise durchgeführt. Es ist jedoch auch möglich, dass durch zumindest eine der beiden Fluidisierzonen zumindest zeitweise kein Gas eingeleitet wird. Das Einleiten eines Gases kann in Abhängigkeit vom ermittelten Fluidisierungsgrad gesteuert werden, insbesondere können die Dauer des Einleitens und/oder der Gasdruck, mit dem das Gas eingeleitet wird, in Abhängigkeit des ermittelten Fluidisierungsgrads gesteuert werden. Die Steuerung der Betriebsparameter erfolgt durch die Steueranordnung. Beispielweise können die Dauer des Einleitens und/oder der Gasdruck erhöht werden, wenn der ermittelte Fluidisierungsgrad zu niedrig ist, d.h. unterhalb eines vordefinierten unteren Schwellenwerts liegt. Umgekehrt können die Dauer des Einleitens und/der der Gasdruck vermindert werden, wenn der ermittelte Fluidisierungsgrad zu hoch ist, d.h. oberhalb eines vordefinierten oberen Schwellenwerts liegt.

Das Einfüllen der ersten und/oder zweiten Pulverkomponente (Schritt b) kann für jede Pulverkomponente getrennt erfolgen. Alternativ können die beiden Pulverkomponenten auch gleichzeitig bzw. zusammen eingefüllt werden, beispielsweis in einem vorgemischten Zustand, der nicht dem durch die Mischvorrichtung zu erzielenden Durchmischungsgrad entspricht. Das Einfüllen kann beispielsweise, wie weiter oben in Bezug auf die Mischvorrichtung beschrieben, durch Zuführen der ersten und/oder zweiten Pulverkomponente über eine Pulverleitung aus einem externen Pulvervorrat erfolgen. Vorzugsweise entspricht Schritt b) dem oben beschriebenen Betriebsmodus "Füllen" der Mischvorrichtung. Die Einleitgeschwindigkeit der ersten und/oder der zweiten Pulverkomponente in den ersten und/oder den zweiten Behälter kann in Abhängigkeit vom Fluidisierunggrad geändert und/oder gesteuert werden. Dies kann mit der Steuerung bzw. der Feststellung der Austrittgeschwindigkeit der ersten und/oder der zweiten Pulverkomponente aus dem ersten und/oder dem zweiten Behälter kombiniert werden.

Beim Mischen der ersten und zweiten Pulverkomponente im Schritt c) werden die erste und/oder zweite Pulverkomponente vorzugsweise in einem Kreislauf gefördert, wie oben beschrieben. Vorzugsweise entspricht Schritt c) dem oben beschriebenen Betriebsmodus "Mischen" der Mischvorrichtung. Vorzugsweise wird Schritt c) bis zum Erreichen eines vorab festgelegten Durchmischungsgrades der ersten und zweiten Pulverkomponente und/oder während einer vorab festgelegten Zeitspanne durchgeführt. Der Durchmischungsgrad kann in Korrelation mit dem Fluidisierungsgrad stehen. Beispielwese kann ein festgelegter Durchmischungsgrad erreicht werden, wenn ein bestimmter Fluidisierungsgrad der ersten und/oder der zweiten Pulverkomponente und/oder der Pulvermischung vorliegt.

Schritt d) entspricht vorzugsweise dem oben beschriebenen Betriebsmodus "Fördern" der Mischvorrichtung.

Beim Ermitteln (Schritt e) wird der Fluidisierungsgrad ermittelt. Die Ermittlung basiert beispielweise auf der Messung der Viskosität der ersten und/oder der zweiten Pulverkomponente und/oder der Feuchtigkeitsgehalt in der ersten und/oder der zweiten Pulverkomponente. Alternativ oder zusätzlich kann die Temperatur der ersten und/oder der zweiten Pulverkomponente gemessen werden. Die Viskosität und/oder der Feuchtigkeitsgehalt und/oder die Temperatur werden vorzugsweise an der Ausgabeöffnung des ersten Behälters gemessen. Alternativ oder ergänzend können diese auch in der Pulverleitung und/oder an der Pulveröffnung des zweiten Behälters gemessen werden. In einer weiteren bevorzugten Ausführungsform werden die Viskosität und/oder der Feuchtigkeitsgehalt und/oder die Temperatur im ersten und/oder im zweiten Behälter gemessen. Das Ermitteln (Schritt e) kann mit einem bestimmten (vordefinierten und/oder im laufenden Verfahren automatisiert abgeleiteten) Takt und für eine bestimmte (vordefinierten und/oder im laufenden Verfahren automatisiert abgeleiteten) Dauer erfolgen.

Bei Steuern (Schritt f) werden zumindest einige der Betriebsparameter, die die anderen Schritte charakterisieren, angepasst und/oder geändert. Vorzugweise werden die Betriebsparameter in Korrelation mit dem Ergebnis aus dem Ermitteln des Fluidisierungsgrads (Schritt e) angepasst. Die gemessene Viskosität bzw. der gemessene Feuchtigkeitsgrad bzw. die gemessene Temperatur können Hinweise über die Effizienz der anderen Verfahrensschritte geben. Basierend auf dem Hinweis über die Effizienz dieser Verfahrensschritte können die entsprechenden Betriebsparameter angepasst werden, damit die Verfahrensschritte effizienter werden. Beispielweise kann eine hohe Viskosität bedeuten, dass die erste und die zweite Pulverkomponenten nicht ausreichend gemischt oder nicht ausreichend homogen miteinander gemischt sind. Wenn eine hohe Viskosität gemessen wird, können die erste und/oder die zweite Pulverkomponenten länger gemischt werden (Schritt c). Alternativ oder zusätzlich kann Gas länger bzw. in längeren Zeitintervallen und/oder in schneller getakteten Zeitintervallen eingeleitet werden (Schritt a). Der Druck, mit dem das Gas in die Fluidisierungszone eingeleitet wird, kann ebenso stärker bzw. schwächer werden.

Die Verfahrensschritte von a) bis f) können miteinander korreliert und/oder gekoppelt werden. Beispielweise können sie in einer vorbestimmten Reihenfolge ausgeführt werden. Ferner können einige Verfahrensschritte statt anderer ausgeführt oder wiederholt ausgeführt werden. Vorzugsweise werden die Verfahrensschritte nicht in einer festen Reihenfolge ausgeführt, sondern je nach der Entwicklung der Verfahrensbedingungen. Ferner können verschiedene Verfahrensschritte gleichzeitig ausgeführt werden.

Bespielweise kann das Ermitteln des Fluidisierungsgrads (Schritt e) im Wesentlichen gleichzeitig mit dem Einleiten des Gases in den Fluidisierungzone(n) ausgeführt werden. Wenn das Einleiten des Gases mit einem zeitlichen Takt erfolgt, kann das Ermitteln des Fluidisierungsgrads mit einem damit korrelierten Takt erfolgen. Beispielweise kann der Fluidisierungsgrad in den Zeitintervallen ermittelt werden, in denen das Einleiten des Gases in die Fluidisierungzone(n) gestoppt wird. Alternativ kann der Fluidisierungsgrad in den gleichen Zeitintervallen ermittelt werden, in denen das Gas in die Fluidisierungszone(n) eingeleitet wird. Ferner kann der Fluidisierungsgrad unmittelbar nach der Ausführung des Einleitens des Gases in die Fluidisierungszonen(n) ausgeführt werden.

Darüber hinaus kann das Ermitteln des Fluidisierungsgrads (Schritt e) mit dem Mischen (Schritt c) gekoppelt und/oder korreliert werden. Beispielweise kann der Fluidisierungsgrad nach einem bestimmten Zeitintervall, in dem die Pulverkomponenten miteinander gemischt werden, ermittelt werden. Wenn das Mischen durch die Einleitung eines Gases in die Fluidisierungszonen(n) realisiert und/oder erleichtert wird, können die Ermittlung des Fluidisierungsgrads und die Einleitung des Gases gemäß der Beschreibung für die Korrelation zwischen den Schritten a) und e) gekoppelt werden.

Das Fördern (Schritt d) und/oder das Mischen (Schritt c) können miteinander und mit dem Ermitteln (Schritt e) kombiniert und/oder gekoppelt werden. Beispielweise kann das Mischen unterbrochen und das Fördern eingeleitet werden in Abhängigkeit vom ermittelten Fluidisierungsgrad.

Das Einfüllen (Schritt b) und das Fördern (Schritt d) können miteinander kombiniert werden, insbesondere wenn die Pulvermischung im Kreislauf erfolgt.

Darüber hinaus wird das Steuern (Schritt f) mit allen anderen Verfahrensschritten kombiniert/gekoppelt, indem das Steuern die Betriebsparameter der anderen Verfahrensschritte, vorzugsweise in Abhängigkeit vom gemessenen Fluidisierungsgrad, ändern/anpasst.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts mit einer Mischvorrichtung gemäß einer Ausführungsform der vorliegenden Erfindung.
- Fig. 2: ist eine schematische, im Schnitt dargestellte Ansicht der in Fig. 1 gezeigten Mischvorrichtung.
- Fig. 3: ist eine schematische Ansicht eines unteren Bereichs eines Innenbehälters und eines Außenbehälters der in Fig. 2 gezeigten Mischvorrichtung.
- Fig. 4a bis 4c: sind schematische Ansichten der in Fig. 2 und 3 gezeigten Mischvorrichtung in einem ersten, zweiten und dritten Betriebszustand.
- Fig. 5a bis 5c: sind schematische Draufsichten der in Fig. 2 und 3 gezeigten Mischvorrichtung gemäß verschiedenen Ausführungsbeispielen.
- Fig. 6: zeigt schematisch Schritte eines erfindungsgemäßen Verfahrens zur Her-stellung einer Pulvermischung unter Verwendung der in den Figuren 2 bis 5c gezeigten Mischvorrichtung.

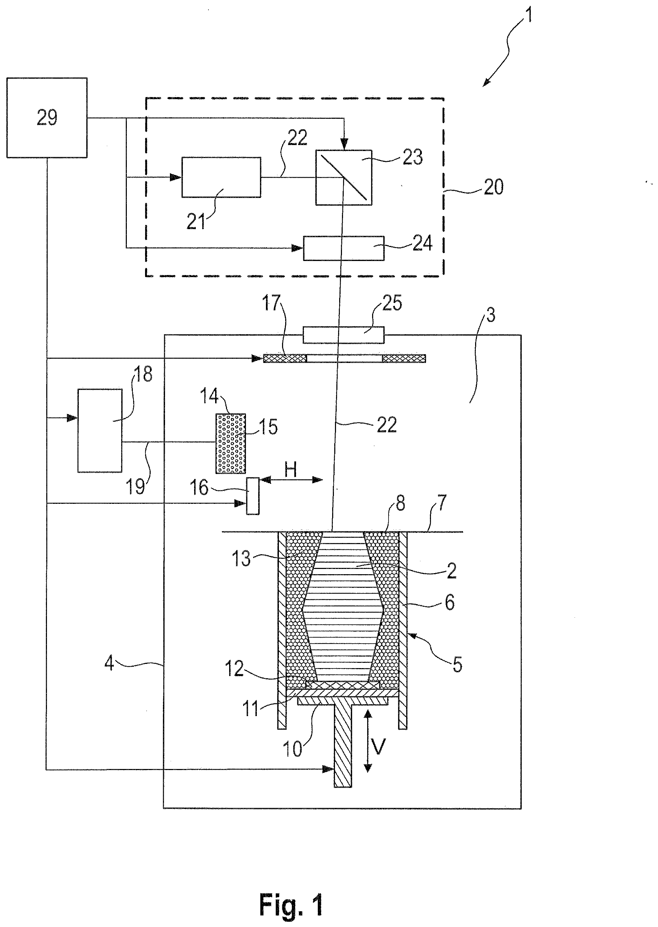

Im Folgenden wird mit Bezug auf Fig. 1 eine Ausführungsform einer additiven Herstellvorrichtung mit einer erfindungsgemäßen Mischvorrichtung beschrieben. Die in Fig. 1 dargestellte Vorrichtung ist rein beispielhaft als eine Lasersinter- oder Laserschmelzvorrichtung 1 ausgebildet. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Optional ist auf der Grundplatte 11 eine Bauplattform 12, wobei die Bauplattform 12 oder die Grundplatte 11 als Bauunterlage, auf der das Objekt 2 aufgebaut wird, dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

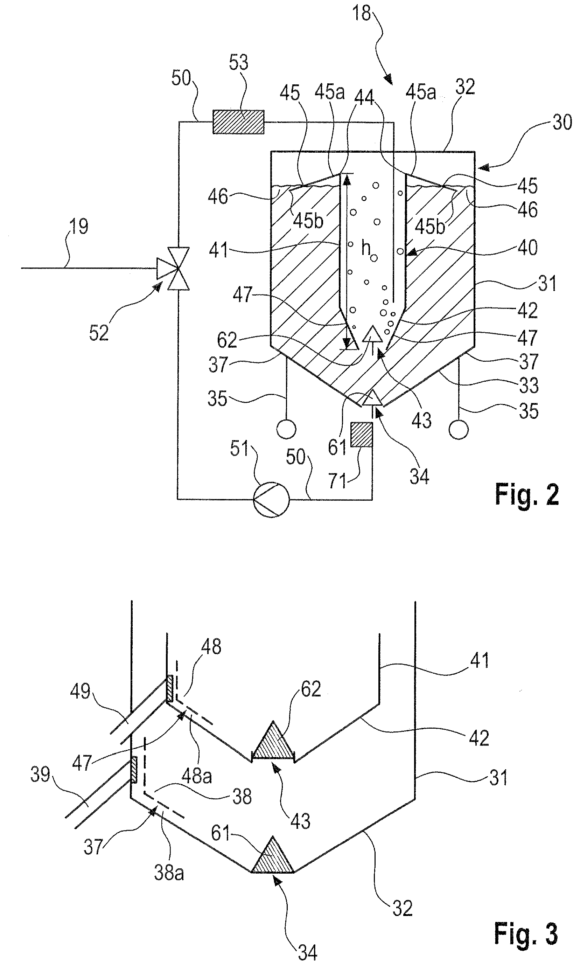

Die Lasersintervorrichtung 1 enthält weiter einen Vorratsbehälter 14 für ein durch elektromagnetische Strahlung verfestigbares pulverförmiges Aufbaumaterial 15. Zum Bereitstellen des pulverförmigen Aufbaumaterials 15, insbesondere einer Pulvermischung aus einer ersten und einer zweiten Pulverkomponente, ist eine Mischvorrichtung 18 vorgesehen, welche weiter unten mit Bezug auf Fig. 2 und 3 näher beschrieben wird. Die Mischvorrichtung 18 ist in der in Fig. 1 gezeigten Ausführungsform der Lasersintervorrichtung 1 außerhalb der Prozesskammer 3 vorgesehen, sie kann jedoch auch zumindest teilweise innerhalb der Prozesskammer 3 vorgesehen sein. Die Mischvorrichtung 18 ist über eine Entnahmeleitung 19, beispielsweise einer Rohrleitung, mit dem Vorratsbehälter 14 verbunden, um dem Vorratsbehälter 14 pulverförmiges Aufbaumaterial 15 aus der Mischvorrichtung 18 zuzuführen. Die Mischvorrichtung 18 kann zumindest teilweise integral mit der Herstellvorrichtung 1 ausgebildet sein, d. h. in dieser vorgesehen sein, oder separat von der Lasersintervorrichtung 1 ausgebildet sein, d. h. extern von dieser vorgesehen sein.

Als Aufbaumaterial können verschiedene Arten von Pulver, insbesondere gemischte Pulver, verwendet werden, insbesondere Metallpulver, Kunststoffpulver, Keramikpulver, Sand oder gefüllte Pulver. Anstelle von Pulver können auch andere geeignete Materialien als Aufbaumaterial verwendet werden, die zumindest eine von der Mischvorrichtung bereitgestellte Pulvermischung enthalten.

Die Lasersintervorrichtung 1 enthält weiter einen in einer horizontalen Richtung H bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den ganzen zu beschichtenden Bereich. Optional ist in der Prozesskammer 3 zum Beheizen des aufgebrachten Aufbaumaterials 15 eine Strahlungsheizung 17 angeordnet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

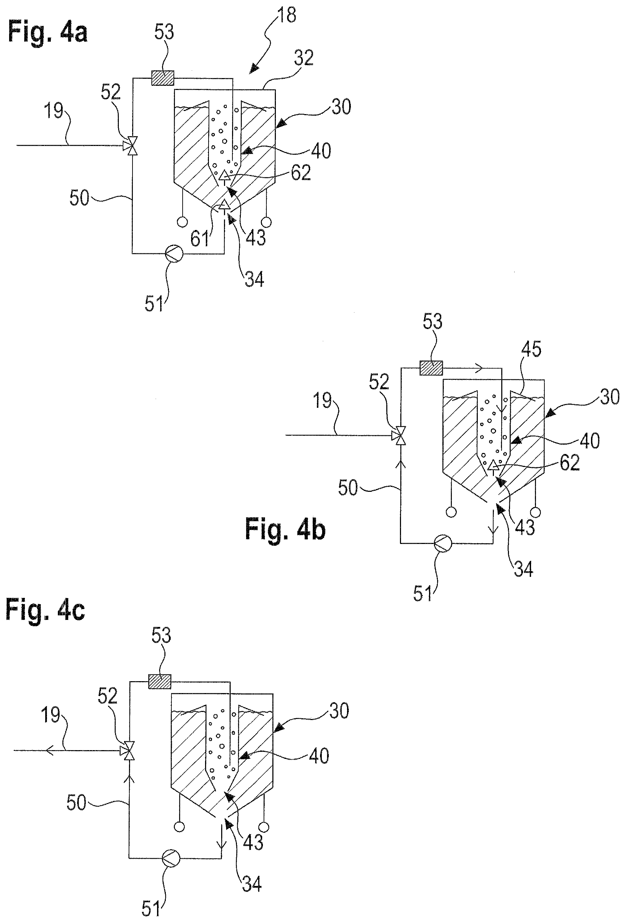

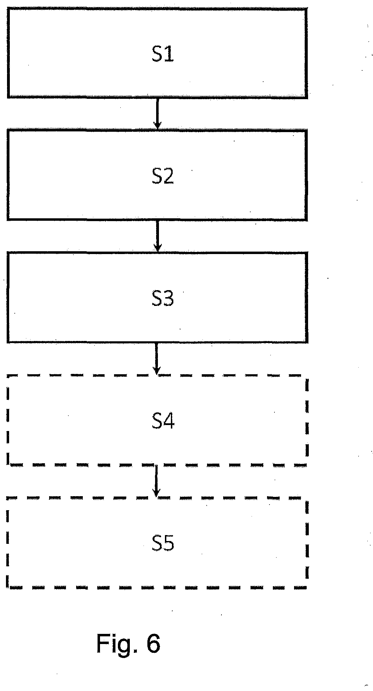

Im Betrieb wird dem Vorratsbehälter 14 über die Entnahmeleitung 19 pulverförmiges Aufbaumaterial 15 aus dem Mischbehälter 18 zu geführt. Das pulverförmige Aufbaumaterial 15 wird vorab in dem Mischbehälter 18 gemischt, vorzugsweise aus zwei oder mehr verschiedenen Pulverkomponenten gemischt. Das Mischen des pulverförmigen Aufbaumaterials und dessen Zuführen zu dem Vorratsbehälter 14 wird weiter unten mit Bezug auf Fig. 4a-c und Fig. 6 näher beschrieben.

Dann wird zum Aufbringen einer Pulverschicht der Träger 10 um eine Höhe abgesenkt, die der gewünschten Schichtdicke entspricht und der Beschichter 16 fährt zu dem Vorratsbehälter 14 und nimmt aus ihm eine zum Aufbringen einer Schicht ausreichende Menge des Aufbaumaterials 15 auf. Dann fährt er über das Baufeld 8, bringt dort pulverförmiges Aufbaumaterial 15 auf die Bauunterlage oder eine bereits vorher vorhandene Pulverschicht auf und zieht es zu einer Pulverschicht aus. Optional wird das pulverförmige Aufbaumaterial 15 mittels einer Strahlungsheizung 17 auf eine Arbeitstemperatur aufgeheizt. Anschließend wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Diese Schritte werden solange wiederholt, bis das Objekt 2 fertiggestellt ist und der Prozesskammer 3 entnommen werden kann.

Im Folgenden wird mit Bezug auf Fig. 2 und 3 die Mischvorrichtung 18 näher beschrieben. Die Mischvorrichtung 18 umfasst zur Aufnahme zumindest einer ersten und/oder zweiten Pulverkomponente einen ersten Behälter in Form eines Außenbehälters 30 und einen zweiten Behälter in Form eines Innenbehälters 40, der innerhalb des Außenbehälters 30, d. h. in dessen Innenraum, angeordnet ist. Der Außenbehälter kann verfahrbar ausgebildet sein, beispielsweise an oder auf einer Verfahrvorrichtung 35 mit Rollen, Rädern, Schienen oder dergleichen angebracht sein.

Der Außenbehälter 30 ist seitlich durch eine Behälterwandung 31 begrenzt, zu seiner Oberseite hin ist er durch einen Behälterdeckel 32 begrenzt und zu seiner Unterseite hin durch eine untere Begrenzung in Form eines Behälterbodens 33. Der Behälterdeckel 32 ist so ausgebildet, dass er in einer geschlossenen Stellung den Außenbehälter 30 zu dessen Oberseite hin pulverdicht verschließt und in einer geöffneten Stellung den Außenbehälter 30 zu dessen Oberseite hin zumindest teilweise, vorzugsweise vollständig, freigibt bzw. öffnet. Der Behälterboden 33 des Außenbehälters 30 ist vorzugsweise trichterförmig ausgebildet und weist eine Ausgabeöffnung 34 zum Ausgeben der ersten und/oder zweiten Pulverkomponente auf.

Der Innenbehälter 40 ist seitlich durch eine Behälterwandung 41 begrenzt und zu seiner Unterseite hin durch eine untere Begrenzung in Form eines Behälterbodens 42 begrenzt. Der Behälterboden 42 des Innenbehälters 40 ist vorzugsweise trichterförmig ausgebildet und weist eine Pulveröffnung 43 zum Ausgeben der ersten und/oder zweiten Pulverkomponente auf. Zu seiner Oberseite hin ist der Innenbehälter 40 zumindest teilweise, vorzugsweise vollständig, offen ausgebildet und weist an seiner Oberseite eine obere Begrenzung in Form eines Behälterrandes 44 auf. Der Innenbehälter 40 erstreckt sich über eine Höhe h zwischen seinem untersten Punkt, in Fig. 2 der Pulveröffnung 43, und seinem Behälterrand 44.

In Figur 2 ist der Innenbehälter 40 im Wesentlichen in allen Raumrichtungen von dem Außenbehälter 30 beabstandet und im Wesentlichen mittig positioniert. Die beiden Behälterwandungen 31, 41, die beiden Behälterböden 33, 42 und die beiden oberen Begrenzungen (d.h. der Behälterdeckel 32 und der Behälterrand 44) der beiden Behälter 30, 40 sind jeweils voneinander beabstandet. Vorzugsweise ist der Innenbehälter 40 zumindest in einer Raumrichtung vom dem Außenbehälter 30 beabstandet. In zumindest einer anderen Richtung kann der Innenbehälter 30 zumindest teilweise an einer Wandung des Außenbehälters anliegen, vorzugweise befestigt sein.

An der Behälterwandung 41 des Innenbehälters 40, vorzugsweise an dessen Behälterrand 44, ist ein Ablenkelement in Form eines Ablenkbleches 45 vorgesehen. Das Ablenkblech 45 ist vorzugsweise spaltfrei an der Behälterwandung 41 angeordnet und erstreckt sich von einem ersten Ende 45a an bzw. nahe der Behälterwandung 41 zu einem zweiten Ende 45b hin nach außen, d. h. in Richtung der Behälterwandung 31 des Außenbehälters 30. In vertikaler Richtung ist das erste Ende 45a des Ablenkblechs oberhalb des zweiten Endes 45b vorgesehen, sodass das Ablenkblech 45 nach unten, d.h. in Richtung des Behälterbodens 33 bzw. der Ausgabeöffnung 34 des Außenbehälters 30, geneigt ist. Das zweite Ende 45b des Ablenkblechs 45 ist vorzugsweise in einem Abstand zu der Behälterwandung 31 des Außenbehälters 30 vorgesehen, sodass ein Spalt 46 zwischen der Behälterwandung 31 des Außenbehälters 30 und dem Ablenkblech 45 vorgesehen ist. Dieser Spalt 46 ist derart bemessen, um die erste und/oder zweite Pulverkomponente hindurch zu lassen. Vorzugsweise erstreckt sich das Ablenkelement 45 über den gesamten Umfang des Innenbehälters (in Fig. 2 nicht gezeigt).

Der Außenbehälter 30 und der Innenbehälter 40 umfassen eine Fluidisierungszone 37 bzw. 47. Auch wenn das vorliegende Ausführungsbeispiel Fluidisierungszonen 37, 47 sowohl im Außenbehälter 30 als auch im Innenbehälter 40 aufweist, so ist es im Rahmen der vorliegenden Erfindung wesentlich, weil besonders vorteilhaft und effektiv, dass der Innenbehälter 40 eine Fluidisierungszone aufweist.

Wie am besten aus Fig. 3 ersichtlich ist, sind die Fluidisierungszone 37 des Außenbehälters 30 und die Fluidisierungszone 47 des Innenbehälters 40 durch entsprechend ein Gaseinleitelement 38 und 48, beispielsweise ein Gitter oder eine poröse Platte, gebildet. Die Fluidisierungszonen 37 und 47 sind in einem Abstand zum Behälterboden 42 bzw. 33 vorgesehen. Zwischen den jeweiligen Gaseinleitelementen 38 und 48 und dem Behälterboden 33 und 42 sind jeweils Hohlräume 38a und 48a gebildet, die mit einer Gaszuleitungen 39 und 49 gasleitend in Verbindung stehen. Die Gaseinleitelemente 38 und 48 sind so ausgebildet bzw. die Spalte des Gitters oder die Poren der porösen Platte sind derart dimensioniert, dass durch die Gaszuleitung 39 und 49 in den Hohlraum 38a und 48a eingeleitetes Gas durch das Gaseinleitelement 38 und 48 bzw. die Spalte des Gittes bzw. die Poren der porösen Platte in den Außenbehälter 30 und Innenbehälter 40 gelangen kann, jedoch kein pulverförmiges Aufbaumaterial (d.h. die erste und zweite Pulverkomponente) aus dem Außenbehälter 30 und aus dem Innenbehälter 40 durch die Gaseinleitelemente austreten kann. Die Spalte des Gitters bzw. der porösen Platten bilden einen bestimmten Winkel mit der Haupterstreckungsrichtung des Gitters bzw. der porösen Platten bzw. des Gaseinleitelements 38 und/oder 48. Vorzugsweise liegen die Spalte senkrecht oder parallel zur Haupterstreckungsrichtung des Gitters bzw. der porösen Platten bzw. des Gaseinleitelements 38 und/oder 48. Die Fluidisierungszone 37 und die Fluidisierungszone 47 können sich über die gesamten Wandungen 31 und 41 erstrecken oder nur abschnittsweise an diesem ausgebildet sein. Vorzugsweise, wie in Fig. 3 gezeigt, sind die Fluisisierungszonen an der Kante einer trichterförmigen Begrenzung des Außerbehälters und des Innenbehälters angeordnet. Die Gaszuleitungen 39 und 49 stehen vorzugsweise mit einem in den Figuren nicht näher gezeigten Gasreservoir in Verbindung. Das Gasreservoir kann insbesondere außerhalb des Außenbehälters 30 vorgesehen sein und die Gaszuleitungen 39 und 49 können hierzu beispielsweise durch die Behälterwandungen 31 und 41 geführt sein.

Das (nicht gezeigte) Gasreservoir kann mit einer (nicht gezeigten) Befeuchtungseinrichtung in Verbindung stehen. Die Befeuchtungseinrichtung ermöglicht die Anreicherung des eingeleiteten Gases mit Feuchtigkeit, d.h. Wasser bzw. Wasserdampf.

Weiter umfasst die Mischvorrichtung 18 eine erste Verschlusseinrichtung 61 die dazu ausgebildet ist, die Ausgabeöffnung 34 des Außenbehälters 30 wahlweise zu verschlie-βen oder freizugeben. Weiter ist eine zweite Verschlusseinrichtung 62 vorgesehen, die dazu ausgebildet ist, die Pulveröffnung 43 des Innenbehälters 40 wahlweise zu verschließen oder freizugeben. Die Verschlusseinrichtungen 61, 62 können beispielsweise als Ventile ausgebildet sein. Die Verschlusseinrichtungen 61, 62 können manuell durch einen Benutzer betätigbar sein, vorzugsweise sind sie jedoch automatisch betätigbar, insbesondere durch eine Steuereinheit der Mischvorrichtung (in den Figuren nicht gezeigt) oder durch die Steuereinheit der Lasersintervorrichtung 1 (s. Fig. 1) steuerbar. In Fig. 2 und 3 sind die Verschlusseinrichtungen 61, 62 in einem geschlossenen Zustand gezeigt, in dem sie die Ausgabeöffnung 34 bzw. die Pulveröffnung 43 verschließen.

Wie in Fig. 2 gezeigt ist der Behälterrand 44 des Innenbehälters 40 von dem Behälterdeckel 32 beabstandet vorgesehen, wenn der Behälterdeckel 32 den Außenbehälter 30 zu dessen Oberseite hin verschließt. Weiter ist die Behälterwandung 41 des Innenbehälters von der Behälterwandung 31 des Außenbehälters 30 beabstandet vorgesehen und der Behälterboden 42 des Innenbehälters 40 ist von dem Behälterboden 33 des Außenbehälters 30 beabstandet. Außerdem ist in Figur 1 und 2 der Innenbehälter 40 im Wesentlichen mittig in dem Außenbehälter 30 gezeigt. Vorzugsweise ist der Innenbehälter 40 zumindest in einer Raumrichtung vom dem Außenbehälter 30 beabstandet. In zumindest einer anderen Richtung kann der Innenbehälter 40 zumindest teilweise an einer Wandung 31 des Außerbehälters anliegen, vorzugweise befestigt sein.

Weiter umfasst die Mischvorrichtung 18 eine beispielsweise als eine Rohrleitung ausgebildete Pulverleitung 50, die an die Ausgabeöffnung 34 des Außenbehälters 30 anschließt, um die erste und/oder zweite Pulverkomponente aus dem Außenbehälter 30 auszuleiten. Die Pulverleitung 50 ist außerhalb des Außenbehälters 30 zu dessen Behälterdeckel 32 und durch den Behälterdeckel 32 hindurch in den Innenbehälter 40 hineingeführt. Vorzugsweise ist die Pulverleitung 50 bis in einen unteren Bereich des Innenbehälters 40 hineingeführt, insbesondere in eine untere Hälfte, weiter bevorzugt ein unterstes Drittel des Innenbehälters 40 in Bezug auf seine Höhe h.

In oder an der Pulverleitung 50 ist eine Pumpe 51, insbesondere eine pneumatische Pulverpumpe, vorgesehen um Pulver in der Pulverleitung 50 zu fördern. Die Pumpe 51 kann zur stoßweisen oder kontinuierlichen Förderung des Pulvers in der Pulverleitung 50 ausgebildet sein. Die Pumpe kann als Bestandteil der Mischvorrichtung 18 ausgebildet sein, wie in Fig. 2 gezeigt, oder separat von der Mischvorrichtung 18 als eine externe Pumpe bereitgestellt sein, beispielsweise als Bestandteil eines Fördermoduls.

Weiter ist die Pulverleitung 50 über ein Ventil 52 mit der Entnahmeleitung 19 verbunden, um ein Zuführen von Pulver von der Mischvorrichtung 18 zu dem Vorratsbehälter 14 (s. Fig. 1) zu ermöglichen. Das Ventil 52 ist dazu ausgebildet, durch die Ausgabeöffnung 34 des Außenbehälters 30 ausgegebenes Pulver, d. h. die erste und/oder zweite Pulverkomponente, wahlweise durch die Pulverleitung 50 dem Innenbehälter 40 der Mischvorrichtung 18 zuzuführen oder durch die Entnahmeleitung 19 dem Vorratsbehälter 14 der Herstellvorrichtung 1 zuzuführen. Beispielsweise kann das Ventil 52 als ein Wegeventil, insbesondere als ein 3-2-Wegeventil ausgebildet sein.

Weiter ist in der Pulverleitung 50 optional eine Befeuchtungseinrichtung 53 zum Befeuchten des durch die Pulverleitung 50 geförderten Pulvers, d. h. zum Erhöhen dessen Feuchtigkeitsgehalts, vorgesehen. Alternativ oder zusätzlich zu der Befeuchtungseinrichtung 53 kann das durch die Fluidisierungszone 47 in den Innenbehälter 40 eingeleitete Gas befeuchtet werden.

Die Mischvorrichtung 18 weist vorzugsweise zumindest eine Sensoranordnung 71 auf, die dazu geeignet ist, einen Fluidisierungsgrad der Pulverkomponenten und/oder der Pulvermischung zu ermitteln. Weiter bevorzug ist die Sensoranordnung mit einer Übermittlungseinheit (in den Figuren nicht gezeigt) verbunden, die dazu ausgebildet ist, den gemessenen Fluisisierungsgrad zu übermitteln. Diese Übermittlungseinheit kann in der Sensoreinheit integriert sein bzw. kann die Sensoranordnung zusätzlich dazu geeignet sein, um den gemessenen Fluidisierungsgrad zu übermitteln. Der Fluidisierungsgrad kann basierend auf einer Messung der Viskosität und/oder des Feuchtigkeitsgehalts und/oder der Temperatur der Pulverkomponenten und/oder der Pulvermischung ermittelt werden. Dementsprechend kann die Sensoranordnung ein Viskosimeter (Rheometer) und/oder einen Feuchtigkeitssensor und/oder einen Temperatursensor umfassen. In Fig. 2 ist die Sensoranordnung 71 an der Ausgabeöffnung 32 des Außerbehälters 30 angeordnet. Abweichend von der Darstellung in Fig. 2 kann die Sensoranordnung 71 auch in oder an der Pulverleitung 50 und/oder an der Pulveröffnung 42 des zweiten Behälters 40 angeordnet sein. Die Sensoranordnung 71 kann auch innerhalb des Außenbehälters 30 und/oder des Innenbehälters 40 angeordnet sein. Beispielweise können auch mehrere Sensoranordnungen 71 in der Mischvorrichtung 18 vorgesehen sein.

Die Mischvorrichtung 18 weist vorzugsweise eine Steuereinheit (in den Figuren nicht gezeigt) auf, die mit zumindest einer, vorzugsweise mit allen, anderen Komponenten der Mischvorrichtung verbunden ist. Insbesondere ist die Steuereinheit mit der Sensoranordnung 71 verbunden. Der Steuereinheit kann beispielweise (von der Übermittlungseinheit oder von der Sensoranordnung) der Fluidisierungsgrad übermittelt werden. Die Steuereinheit kann außerdem dazu geeignet sein, den ermittelten Fluidisierunggrad mit einer bestimmten Grenze zu vergleichen oder die relative Änderung des Fluidisierungsgrads über ein bestimmtes Zeitintervall zu berechnen. Abhängig vom Fluidisierungsgrad, insbesondere abhängig vom Ergebnis aus diesem Vergleich bzw. aus dieser Berechnung kann die Steuereinheit Befehle generieren und diese den anderen Komponenten übermitteln, sodass die Betriebsparameter der anderen Komponenten geändert werden. Die Steuereinheit 29 der Lasereinrichtung (s. Fig. 1) kann beispielweise auch die Steuereinheit der Mischvorrichtung sein. Alternativ kann die Steuereinheit 29 der Lasereinrichtung die Steuereinheit der Mischvorrichtung umfassen oder andersherum. Komponenten der Mischvorrichtung, die durch die Steuereinheit steuerbar sind, können beispielsweise die in Fig. 2 gezeigte Pumpe 51 der Pulverleitung 50 sein, und/oder die Befeuchtungseinrichtung 53 und/oder die Verschlusseinrichtungen 61, 62, und/oder eine in den Figuren nicht näher gezeigte Gasfördereinrichtung, die eine Gaszufuhr zu den Fluidisierungszonen 37, 47 steuert.

Die Verschlusseinrichtungen 61, 62 sind, vorzugsweise abhängig voneinander, in drei verschiedene Betriebszustände bringbar, die in Fig. 4a, 4b und 4c gezeigt sind. Fig. 4a zeigt einen ersten Betriebszustand, in dem die Ausgabeöffnung 34 des Außenbehälters 30 durch die erste Verschlusseinrichtung 61 verschlossen ist und die Pulveröffnung 43 des Innenbehälters 40 durch die zweite Verschlusseinrichtung 62 verschlossen ist. In diesem ersten Betriebszustand kann im Wesentlichen kein Pulver vom Innenbehälter 40 durch die Pulveröffnung 43 in den Außenbehälter 30 gelangen. Ebenso kann im Wesentlichen kein Pulver vom Außenbehälter 30 durch die Ausgabeöffnung 34 in die Pulverleitung 50 gelangen. In diesem ersten Betriebszustand kann die Mischvorrichtung beispielsweise in einem Betriebsmodus "Füllen" betrieben werden (s.u.).

Fig. 4b zeigt einen zweiten Betriebszustand, in dem die Pulveröffnung 43 des Innenbehälters 40 durch die zweite Verschlusseinrichtung 62 verschlossen ist und die Ausgabeöffnung 34 des Außenbehälters 30 freigegeben, also nicht durch die erste Verschlusseinrichtung 61 verschlossen ist. In diesem zweiten Betriebszustand kann Pulver vom Außenbehälter 30 durch die Ausgabeöffnung 34 in die Pulverleitung 50 gelangen, jedoch kann im Wesentlichen kein Pulver durch die Pulveröffnung 43 vom Innenbehälter 40 in den Außenbehälter 30 gelangen. In diesem zweiten Betriebszustand kann die Mischvorrichtung beispielsweise in einem Betriebsmodus "Mischen" betrieben werden (s.u.).

Fig. 4c zeigt einen dritten Betriebszustand, in dem sowohl die Pulveröffnung 43 des Innenbehälters 40 als auch die Ausgabeöffnung 34 des Außenbehälters 30 freigegeben ist. In diesem dritten Betriebszustand kann Pulver vom Innenbehälter 40 durch die Pulveröffnung 43 in den Außenbehälter 30 und vom Außenbehälter 30 durch die Ausgabeöffnung 34 in die Pulverleitung 50 gelangen. In diesem dritten Betriebszustand kann die Mischvorrichtung beispielsweise in einem Betriebsmodus "Fördern" betrieben werden (s.u.).

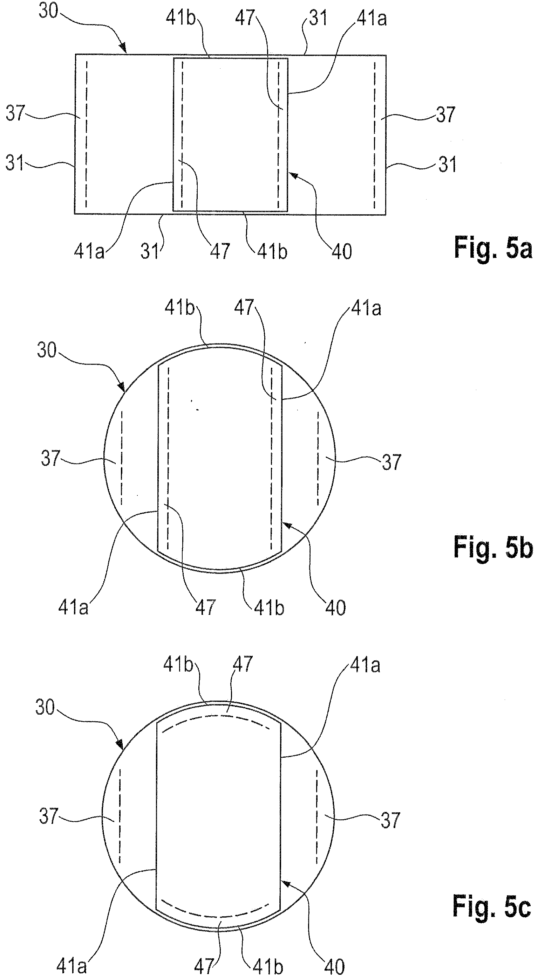

Fig. 5a-5c zeigt Draufsichten der Mischvorrichtung 18 gemäß Weiterbildungen der Mischvorrichtung. In Fig. 5a sind der Außenbehälter 30 und der Innenbehälter 40 viereckig. Die Wandungen 41a den Innenbehälters 40 sind von den Wandungen 31 des Außenbehälters 30 beabstandet, während die Wandungen 41b des Innenbehälters 40 an den Wandungen 31 des Außerbehälters 30 anliegen. Vorzugsweisen sind die Wandungen 41b des Innenbehälters 40 an den Wandungen 31 des Außerbehälters 30 befestigt. Der Außenbehälter 30 weist zwei Fluidisierungszonen 37 auf. Die Fluidisierungszonen 37 sind vorzugsweise an den Wandungen 31, die von den Wandungen 41a des Innenbehälters 40 beabstandet sind, angeordnet. Der Innenbehälter 40 weist zwei Fluidisierungzonen 47 auf, die in Fig. 5a an den Wandungen 41a angeordnet sind, die von den Wandungen 31 des Außenbehälters 30 beabstandet sind. Die Fluidisierungzonen 47 des Innenbehälters 40 können auch an den Wandungen 41b, die an den Wandungen 31 des Außenbehälters 30 anliegen, angeordnet sein. In Fig. 5b und Fig. 5c ist der Außenbehälter 30 rund. Der Innenbehälter 40 weist zwei runde Wandungen 41b und zwei gerade Wandungen 41a auf. Die zwei runden Wandungen 41b haben die gleiche Krümmung wie der Außenbehälter 30. Dadurch ist es möglich, dass die runden Wandungen 41b am Außerbehälter 40 anliegen können. Vorzugsweise sind die runden Wandungen 41b am Außenbehälter 30 befestigt. Innerhalb des Außenbehälters 30 sind an den zwei Wandungen 31, die von der Wandungen 41a des Innenbehälters beabstandet sind, zwei Fluidisierungszonen 37 vorgesehen. Beispielweise können auch zwei Fluidisierungszonen 47 im Innenbehälter vorgesehen sein. In Fig. 5b sind diese an den geraden Wandungen 41a des Innenbehälters 40 angeordnet. In Fig. 5c sind die Fluidisierungszonen 47 an den runden Wandungen 41b des Innenbehälters 40 angeordnet. Obwohl der Außenbehälter 30 und der Innenbehälter 40 in Fig. 5a, Fig. 5b und Fig. 5c eine viereckige bzw. runde Form haben, können sie jede andere beliebige geometrische Form aufweisen.

Im Folgenden wird mit Bezug auf Fig. 4a-4c und Fig. 6 der Betrieb der Mischvorrichtung 18 beschrieben. In einem ersten Schritt S1, welcher auch als ein Betriebsmodus "Füllen" der Mischvorrichtung 18 bezeichnet wird, wird der Mischvorrichtung eine erste Pulverkomponente und/oder eine zweite Pulverkomponente, sowie gegebenenfalls weitere Pulverkomponente(n), zugeführt. Die erste und die zweite Pulverkomponente unterscheiden sich vorzugsweise in ihren chemischen und/oder physikalischen Eigenschaften voneinander. Beispielsweise kann in dem Schritt S1 die erste Pulverkomponente dem Innenbehälter 40 zugeführt werden und die zweite Pulverkomponente dem Außenbehälter 30, die beiden Pulverkomponenten können jedoch auch vermischt dem Außen- und/oder Innenbehälter zugeführt werden. Auch ist es möglich, dass eine der beiden Pulverkomponenten bereits im Innen- und/oder Außenbehälter vorliegt. Zum Einfüllen der Pulverkomponenten kann beispielsweise der Behälterdeckel 32 des Außenbehälters 30 geöffnet werden und die erste und/oder zweite Pulverkomponente manuell durch einen Benutzer dem Außen- und/oder Innenbehälter zugeführt werden. Alternativ oder zusätzlich kann die erste und/oder zweite Pulverkomponente durch die Pulverleitung 50 und/oder eine weitere, in den Figuren nicht gezeigte Zufuhrleitung, in den Innenbehälter 40 eingeleitet werden. Hierbei ist vorzugsweise der Behälterdeckel 32 in seiner geschlossenen Stellung und durch die Fluidisierzone 37 des Außenbehälters 30 und/oder die Fluidisierungszone 47 des Innenbehälters 40 wird Gas eingeleitet um das zugeführte Pulver zu fluidisieren. Während des Zuführens der ersten und/oder zweiten Pulverkomponente (Schritt S1) können die Verschlusseinrichtungen 61, 62 in dem oben in Bezug auf Fig. 4a beschriebenen ersten Betriebszustand sein. Dadurch kann ein Austreten von Pulver durch die Pulveröffnung 43 und die Ausgabeöffnung 34 verhindert werden. Alternativ zu dem in Fig. 4a gezeigten ersten Betriebszustand kann die Pulveröffnung 43 des Innenbehälters 40 auch freigegeben sein, um zu ermöglichen, dass die erste und/oder zweite Pulverkomponente vom Innenbehälter 40 durch die Pulveröffnung 43 in den Außenbehälter 30 gelangt. Auch hier ist die Ausgabeöffnung 34 durch die erste Verschlusseinrichtung 61 verschlossen.

In einem zweiten Schritt S2, welcher auch als ein Betriebsmodus "Mischen" der Mischvorrichtung 18 bezeichnet wird, werden die erste Pulverkomponente und die zweite Pulverkomponente in der Mischvorrichtung 18 miteinander vermischt. In diesem Betriebsmodus sind die Verschlusseinrichtungen 61, 62 in dem oben in Bezug auf Fig. 4b beschriebenen zweiten Betriebszustand vorgesehen und die Pumpe 51 ist aktiv. Das Ventil 52 verschließt in diesem Betriebsmodus die Entnahmeleitung 19 und gibt die in den Innenbehälter 40 führende Pulverleitung 50 frei. Gas wird durch die Fluidisierungzone 37 in den Außenbehälter 30 und/oder durch die Fluidisierungszone 47 in den Innenbehälter 40 eingeleitet. Das Einleiten des Gases kann in vorbestimmten Zeitintervallen und mit einem zeitlichen Takt erfolgen, und das Ermitteln mit einem damit korrelierten Takt erfolgen. Außerdem kann das Gas mit einem bestimmten Gasdruck in die Fluidisierungszonen eingeleitet werden. Durch das Einleiten des Gases wird das in dem Außenbehälter 30 und/oder in dem Innenbehälter 40 befindliche Pulver in einen fluidähnlichen Zustand versetzt. Durch die Einleitung eines Gases durch die Fluidisierungzone 47 tritt Pulver über den Behälterrand 44 des Innenbehälters 40 aus dem Innenbehälter aus. Durch das Ablenkblech 45 wird das überschwappende, fluidisierte Pulver nach außen, d.h. in Richtung der Behälterwandung 31 des Außenbehälters 30, geleitet und gelangt durch den Spalt 46 zwischen Ablenkblech 45 und Behälterwandung 31 des Außenbehälters 30 im Außenbehälter in Richtung dessen Behälterboden 33, wobei es zu einer Durchmischung mit dem im Außenbehälter 30 befindlichen Pulver kommt. Diese Art Mischung wird erleichtert, wenn die Pulveröffnung 43 des Innenbehälters 40 durch die Aktivierung der Verschlusseinrichtung 62 verschlossen ist. Durch die Ausgabeöffnung 34 gelangt das Pulver in die Pulverleitung 50 und wird mittels der Pumpe 51 durch die Pulverleitung 50 gefördert und wieder dem Innenbehälter 30 zugeführt. Optional wird das Pulver in der Pulverleitung 50 mittels der Befeuchtungseinrichtung 53 und/oder im Innenbehälter 40 durch Einleiten eines befeuchteten Gases befeuchtet. Dieser zweite Schritt S2 wird so lange durchgeführt, bis ein vorbestimmter Durchmischungsgrad der beiden Pulverkomponenten erreicht ist und/oder wird während einer vorab festgelegten Zeitspanne durchgeführt. Durch das Zirkulieren des Pulvers durch die Pulverleitung 50 und den Innen- und Außenbehälter wird dabei eine gute Durchmischung des Pulvers, d. h. ein Vermischen der beiden Pulverkomponenten, erzielt. Die Erreichung eines vorbestimmten Durchmischungsgrads kann durch die Ermittlung eines Fluidisierungsgrads festgestellt werden. Die Ermittlung des Fluidisierungsgrads kann optional gemäß der Ausführung von Schritt S4 erfolgen.

Anschließend werden in einem dritten Schritt S3, welcher auch als ein Betriebsmodus "Fördern" der Mischvorrichtung 18 bezeichnet wird, die miteinander vermischten Pulverkomponenten als pulverförmiges Aufbaumaterial 15 dem Vorratsbehälter 14 (s. Fig. 1) zugeführt. Optional kann von Schritt S2 zu Schritt S3 umgeschaltet werden, wenn ein vorbestimmter Durchmischungsgrad bzw. ein vorbestimmter Fluidisierungsgrad erreicht werden. Der Fluidisierungsgrad kann vor oder bei der Umschaltung von Schritt S2 zu Schritt S3 gemäß der Ausführung des optionalen Schritts S4 ermittelt werden. In diesem Betriebsmodus sind die Verschlusseinrichtungen 61, 62 in dem oben in Bezug auf Fig. 4c beschriebenen dritten Betriebszustand vorgesehen und die Pumpe 51 ist aktiv. Das Ventil 52 gibt in diesem Betriebsmodus die Entnahmeleitung 19 frei und verschließt die in den Innenbehälter 40 führende Pulverleitung 50. Somit gelangt in dem Innenbehälter 40 befindliches Pulver durch die Pulveröffnung 43 in den Außenbehälter 30 und vom Außenbehälter 30 durch die Ausgabeöffnung 34 in die Pulverleitung 50, wo es über die Entnahmeleitung 19 dem Vorratsbehälter 14 (s. Fig. 1) zugeführt wird. Dieser dritte Schritt S3 wird vorzugsweise so lange durchgeführt, bis ein vorab festgelegter Pulverfüllstand in dem Vorratsbehälter 14 und/oder der Mischvorrichtung 18 erreicht ist und/oder während einer vorab festgelegten Zeitspanne.

In einem optionalen Schritt S4 wird ein Fluidisierungsgrad der ersten und/oder der zweiten Pulverkomponente und/oder der Pulvermischung ermittelt. Die Ermittlung des Fluidisierungsgrads wird durch eine Sensoranordnung realisiert. Die Ermittlung des Fluidisierungsgrads basiert beispielweise auf der Messung der Viskosität der ersten und/oder der zweiten Pulverkomponente und/oder der Feuchtigkeitsgehalt in der ersten und/oder der zweiten Pulverkomponente. Alternativ oder zusätzlich kann die Temperatur der ersten und/oder der zweiten Pulverkomponente gemessen werden. Die Viskosität und/oder der Feuchtigkeitsgehalt und/oder die Temperatur werden vorzugsweise an der Ausgabeöffnung 34 des ersten Behälters 30 durch die Sensoranordnung 71 in Fig. 2 gemessen. Das Ermitteln (Schritt S4) kann mit einem bestimmten Takt und für eine bestimmte Dauer erfolgen. Ferner kann das Messen mit dem Mischen (Schritt S2) gekoppelt werden. Wenn das Einleiten des Gases während des Mischens (Schritt S2) mit einem zeitlichen Takt erfolgt, kann das Ermitteln mit einem damit korrelierten Takt erfolgen. Beispielweise kann das Ermitteln in den Zeitintervallen erfolgen, in denen das Einleiten des Gases in die Fluidisierungszone 37 und/oder in die Fluidisierungszone 47 gestoppt wird. Alternativ kann das Ermitteln in den gleichen Zeitintervallen erfolgen, in denen das Gas in die Fluidisierungszone 37 und/oder in die Fluidisierungszone 47 eingeleitet wird. Das Koordinieren zwischen dem Mischen (Schritt 2) und dem Ermitteln (Schritt 4) bzw. das Umschalten vom Mischen (Schritt 2) zum Ermitteln (Schritt 4) kann gemäß der Ausführung von Schritt S5, "Steuern", ausgeführt werden.

In einem optionalen Schritt S5 werden zumindest einige der Betriebsparameter, mit denen die anderen Schritte (von Schritt S1 bis S4) ausgeführt werden, gesteuert. Außerdem kann bei der Ausführung von Schritt S5 eine Koordination oder eine Umschaltung von einem Schritt zu einem anderen eingeleitet werden und/oder erfolgen. Vorzugweise werden die Betriebsparameter in Korrelation mit dem Ergebnis aus dem Ermitteln des Fluidisierungsgrads (Schritt S4) angepasst. In Abhängigkeit von und/oder koordiniert mit dem Ergebnis aus dem Ermitteln (Schritt S4) werden die Betriebsparameter des Mischens (Schritt S2) geändert und/oder angepasst. Beispielweise können die Dauer und/oder der Takt des Einleitens des Gases in die Fuildisierungszonen 37 und/oder 47 (wie in Schritt S2) in Abhängigkeit von und/oder koordiniert mit dem Ergebnis aus dem Ermitteln (Schritt S4) geändert und/oder angepasst werden. Außerdem kann der Gasdruck, mit dem das Gas in die Fluidisierungszone 37 und/oder in die Fluidisierungszone 47 eingeleitet wird, in Abhängigkeit von und/oder koordiniert mit dem Ergebnis aus dem Ermitteln (Schritt S4) geändert und/oder angepasst werden. Ferner kann das Fördern (Schritt S3) eingeleitet werden, wenn folgend aus dem Mischen (Schritt S2) ein ausreichender Fluidisierungsrad erreicht wird. Der Fluidisierungsgrad kann im optionalen Schritt S4 ermittelt werden. Umgekehrt kann das Fördern (Schritt S3) unterbrochen werden und das Mischen (Schritt S2) (wieder) eingeleitet werden, wenn ein nicht ausreichender Fluidisierungsgrad erreicht wird. Das Steuern erfolgt durch eine Steuereinheit (nicht gezeigt), die mit den anderen Komponenten der Mischvorrichtung 18 verbunden ist, oder durch die Steuereinheit 29 (s. Fig. 1).

Die Erfindung ist nicht auf die oben beschriebene Ausführungsform einer Mischvorrichtung begrenzt. Die Erfindung wird durch die Ansprüche definiert.

Beispielsweise müssen die Pulveröffnung 43 des Innenbehälters 40 und/oder die Ausgabeöffnung 34 des Außenbehälters 30 nicht in dem jeweiligen Behälterboden 42 bzw. 33 vorgesehen sein. Sie können beispielsweise auch in einem Seitenbereich des jeweiligen Behälters vorgesehen sein, vorzugsweise sind sie in einem unteren Bereich des jeweiligen Behälters vorgesehen. Auch müssen die Behälterböden 33, 42 nicht trichterförmig ausgebildet sein, sie können beispielsweise auch eben sein oder jede andere geeignete Form aufweisen. Ebenso muss die in Fig. 2 und 3 gezeigte Fluidisierungszone 47 nicht in bzw. an dem Behälterboden 42 des Innenbehälters 40 ausgebildet sein. Eine Fluidisierungszone kann alternativ oder zusätzlich auch an bzw. in einem anderen Bereich des Innenbehälters und/oder des Außenbehälters ausgebildet sein, insbesondere einem unteren Bereich des jeweiligen Behälters.

Bei der oben beschriebenen Lasersinter- bzw. Laserschmelzvorrichtung 1 kann der Vorratsbehälter 14 auch integral mit dem Beschichter 16 bereitgestellt sein bzw. das pulverförmige Aufbaumaterial kann aus der Mischvorrichtung 18 über die Entnahmeleitung 19 direkt dem Beschichter 16 zugeführt werden.

Gemäß einer Weiterbildung der oben beschriebenen Mischvorrichtung 18 kann alternativ oder zusätzlich zu der Fluidisierungszone 47 zum Einleiten eines Gases in den Innenbehälter 40 eine in den Figuren nicht nähre gezeigte weitere Fluidisierungszone zum Einleiten eines Gases in den Außenbehälter 30 vorgesehen sein. Diese kann beispielsweise analog zu der Fluidisierungszone des Innenbehälters 40 ausgebildet sein.

In der oben beschriebenen Mischvorrichtung ist der Innenbehälter 40 (allgemein: ein zweiter Behälter) in dem Außenbehälter 30 (allgemein: ein erster Behälter) vorgesehen. Alternativ zu dieser Ausgestaltung können ein erster und ein zweiter Behälter auch räumlich getrennt, beispielsweise nebeneinander, vorgesehen sein und die erste und/oder zweite Pulverkomponente kann über entsprechende strukturelle Elemente, beispielsweise Pulverleitungen bzw. Rohre, zwischen den Behältern ausgetauscht bzw. in einem Kreislauf gefördert werden.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials, welches zumindest eine Pulvermischung umfasst, angewendet werden.

Die Belichtungsvorrichtung der additiven Herstellvorrichtung kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichtungsvorrichtung jede Einrichtung verwendet werden, mit der Energie als Wellen- oder Teilchenstrahlung selektiv auf eine Schicht des Aufbaumaterials aufgebracht werden kann, beispielsweise eine andere Lichtquelle, ein Elektronenstrahl oder jede andere Energie- bzw. Strahlenquelle, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das additive Herstellen eines Objekts mittels schichtweisen Auftragens und selektiven Verfestigens eines Aufbaumaterials unabhängig von der Art und Weise, in der das Aufbaumaterial verfestigt wird.

Anstelle eines pulverförmigen Aufbaumaterials kann auch ein geeignetes anderes Aufbaumaterial, beispielsweise ein pastöses Aufbaumaterial, verwendet werden, welches zumindest eine von der oben beschriebenen Mischvorrichtung bereitgestellte Pulvermischung enthält.

## Patentansprüche

1. Mischvorrichtung zum Herstellen einer Pulvermischung aus einer ersten Pulverkomponente und zumindest einer zweiten Pulverkomponente für eine additive Herstellvorrichtung (1), in der ein dreidimensionales Objekt (2) durch schichtweises selektives Verfestigen eines Aufbaumaterials (15), welches die Pulvermischung umfasst, herstellbar ist, wobei die Mischvorrichtung (18) umfasst:
einen ersten Behälter (30) zur Aufnahme der ersten und/oder der zweiten Pulverkomponente, wobei an einer unteren Begrenzung (33) des ersten Behälters (30) eine Ausgabeöffnung (34) zum Ausgeben der ersten und/oder zweiten Pulverkomponente vorgesehen ist, und
einen zweiten Behälter (40) zur Aufnahme der ersten und/oder der zweiten Pulverkomponente, wobei der zweite Behälter (40) zu einer Oberseite hin zumindest abschnittsweise offen ausgebildet ist,
wobei der erste Behälter (30), insbesondere zumindest an einer Behälterwandung (31), zumindest eine Fluidisierungszone (37) aufweist zum Einleiten eines Gases in den ersten Behälter und
wobei die Mischvorrichtung (18) weiter eine Pulverleitung (50) umfasst, die an die Ausgabeöffnung (34) des ersten Behälters (30) anschließt und in den zweiten Behälter (40) hineingeführt ist, **dadurch gekennzeichnet,**
**dass** der zweite Behälter (40) innerhalb des ersten Behälters (30) angeordnet ist und wobei der zweite Behälter (40) zumindest an einer Wandung (31) des ersten Behälters (30) anliegt.

2. Mischvorrichtung nach Anspruch 1, wobei der erste Behälter (30) zu einer Oberseite hin durch einen Behälterdeckel (32) verschließbar ist und wobei der zweite Behälter (40) innerhalb des ersten Behälters (30) so vorgesehen ist, dass eine obere Begrenzung (44) des zweiten Behälters (40) von dem Behälterdeckel (32) des ersten Behälters (30) beabstandet ist und wobei die Pulverleitung (50) vorzugsweise durch den Behälterdeckel (32) des ersten Behälters in den zweiten Behälter hinein geführt ist.

3. Mischvorrichtung nach Anspruch 1 oder 2, wobei an einer unteren Begrenzung (42) des zweiten Behälters (40) eine Pulveröffnung (43) zur Ausgabe der ersten und/oder der zweiten Pulverkomponente vorgesehen ist.

4. Mischvorrichtung nach einem der vorhergehenden Ansprüche, weiter umfassend zumindest eine erste Verschlusseinrichtung (61), die dazu ausgebildet ist, die Ausgabeöffnung (34) des ersten Behälters (30) zu verschließen und/oder freizugeben, und/oder zumindest eine zweite Verschlusseinrichtung (62), die dazu ausgebildet ist, die Pulveröffnung (43) des zweiten Behälters (40) zu verschließen und/oder freizugeben.

5. Mischvorrichtung nach Anspruch 4, bei der die erste Verschlusseinrichtung (61) und die zweite Verschlusseinrichtung (62) ausgebildet sind, die jeweilige Ausgabeöffnung (34) bzw. Pulveröffnung (43) in Abhängigkeit von einem Betriebszustand der jeweils anderen Verschlusseinrichtung und/oder in Abhängigkeit von einem definierten Betriebsmodus der Mischvorrichtung (18) zu verschließen und/oder freizugeben.

6. Mischvorrichtung gemäß Anspruch 5, bei der zumindest einer der folgenden Betriebszustände vorgesehen ist:
ein erster Zustand bei dem die Ausgabeöffnung (34) des ersten Behälters (30) freigegeben und die Pulveröffnung (43) des zweiten Behälters (40) verschlossen ist und/oder
ein zweiter Zustand bei dem die Ausgabeöffnung (34) des ersten Behälters (30) verschlossen und die Pulveröffnung (43) des zweiten Behälters (40) freigegeben ist und/oder
ein dritter Zustand bei dem die Ausgabeöffnung (34) des ersten Behälters (30) und die Pulveröffnung (43) des zweiten Behälters (40) beide verschlossen oder beide freigegeben sind.

7. Mischvorrichtung nach einem der Ansprüche 1 bis 6, wobei ein unterer Bereich des ersten Behälters (30), insbesondere dessen untere Begrenzung (33), und/oder der untere Bereich des zweiten Behälters (40), insbesondere dessen untere Begrenzung (42), zumindest abschnittsweise trichterförmig ausgebildet ist bzw. sind und wobei bevorzugt ein unterer Bereich des ersten Behälters (30), insbesondere die Ausgabeöffnung (34), an ein Fördermodul anschließbar ist.

8. Mischvorrichtung nach einem der Ansprüche 1 bis 7, wobei der zweite Behälter (40) zumindest an einer Wandung (31) des ersten Behälters (30) befestigt ist.

9. Mischvorrichtung nach einem der Ansprüche 1 bis 8, wobei an dem zweiten Behälter (40) zumindest ein Ablenkelement (45) vorgesehen ist, welches sich im Wesentlichen von der oberen Begrenzung (44) des zweiten Behälters in Richtung zumindest einer nächstgelegenen Wandung (31) des ersten Behälters (30) erstreckt und
wobei das Ablenkelement (45) vorzugsweise ausgehend von der oberen Begrenzung (44) des zweiten Behälters (40) in Richtung der unteren Begrenzung (33) des ersten Behälters (30) geneigt ist.

10. Mischvorrichtung nach einem der Ansprüche 1 bis 9, wobei der erste und/oder zweiten Behälter manuell oder und/oder teilautomatisch und/oder automatisch befüllt werden kann, insbesondere über die Pulverleitung (50), und/oder
wobei die Pulverleitung (50) mit einer Entnahmeleitung (19) zur Entnahme der Pulvermischung aus der Mischvorrichtung (18) verbunden ist.

11. Mischvorrichtung nach einem der Ansprüche 1 bis 10, weiter umfassend eine Befeuchtungseinrichtung (53) ausgebildet und/oder angeordnet und/oder ausgerichtet zur Befeuchtung der ersten und/oder zweiten Pulverkomponente, in der Pulverleitung (50) und/oder in der Fluidisierungszone (37)

12. Additive Herstellvorrichtung zur Herstellung eines dreidimensionalen Objekts (2) durch schichtweises selektives Verfestigen eines Aufbaumaterials (15),
wobei die Herstellvorrichtung (1) eine Mischvorrichtung (18) gemäß einem der Ansprüche 1 bis 11 aufweist und/oder damit verbunden ist.

13. Verfahren zur Herstellung einer Pulvermischung aus einer ersten Pulverkomponente und zumindest einer zweiten Pulverkomponente in einer Mischvorrichtung (18), wobei
die erste und/oder die zweite Pulverkomponente durch einen ersten Behälter (30) aufgenommen wird, wobei an einer unteren Begrenzung (33) des ersten Behälters eine Ausgabeöffnung (34) zum Ausgeben der ersten und/oder zweiten Pulverkomponente vorgesehen ist, und
die erste und/oder die zweite Pulverkomponente durch einen zweiten Behälter (40) aufgenommen wird, wobei der zweite Behälter zu einer Oberseite hin zumindest abschnittsweise offen ausgebildet ist,
wobei der erste Behälter (30), insbesondere zumindest an einer Behälterwandung (31), zumindest eine Fluidisierungszone (37) aufweist zum Einleiten eines Gases in den ersten Behälter und
wobei die Mischvorrichtung (18) weiter eine Pulverleitung (50) umfasst, die an die Ausgabeöffnung (34) des ersten Behälters (30) angeschlossen und in den zweiten Behälter (40) hineingeführt ist,
wobei der zweite Behälter (40) innerhalb des ersten Behälters (30) angeordnet ist und wobei der zweite Behälter (40) zumindest an einer Wandung (31) des ersten Behälters (30) anliegt.

14. Verfahren gemäß Anspruch 13, **gekennzeichnet durch** folgende Schritte:
a) Einleiten eines Gases durch die erste Fluidisierungszone (37) in den ersten Behälter (30) und/oder durch eine zweite Fluidisierungszone (47) in den zweiten Behälter (40) und
b) manuelles oder und/oder teilautomatisches und/oder automatisches Einfüllen (S1) der ersten und/oder zweiten Pulverkomponente in den ersten und/oder zweiten Behälter (30, 40),
c) Mischen (S2) der ersten und zweiten Pulverkomponente aus dem ersten und/oder zweiten Behälter (30, 40)
d) Ausleiten (S3) der ersten und/oder zweiten Pulverkomponente durch die Ausgabeöffnung (34) des ersten Behälters (30) aus dem ersten Behälter (30) über die Pulverleitung (50) in eine additive Herstellvorrichtung (1) und/oder einen Vorratsbehälter (14),
e) Optional: Ermitteln (S4) eines Fluidisierungsgrads der ersten und/oder zweiten Pulverkomponente und/oder der Pulvermischung und
f) Optional: Steuern (S5) von Betriebsparametern der vorgenannten Verfahrensschritte in Abhängigkeit vom ermittelten Fluidisierungsgrad.

## Claims

1. A mixing device for producing a powder mixture of a first powder component and at least one second powder component for an additive manufacturing device (1) in which a three-dimensional object (2) can be produced by layer-wise selective solidification of a building material (15) comprising the powder mixture, the mixing device (18) comprising:
a first container (30) for receiving the first and/or the second powder component, wherein a discharge opening (34) for discharging the first and/or the second powder component is provided at a lower boundary (33) of the first container (30), and
a second container (40) for receiving the first and/or the second powder component, wherein the second container (40) is designed to be at least partially open towards an upper side,
wherein the first container (30) comprises, in particular at least on a container wall (31), at least one fluidization zone (37) for introducing a gas into the first container, and
wherein the mixing device (18) further comprises a powder conduit (50) that connects to the discharge opening (34) of the first container (30) and is guided into the second container (40), **characterized in that**
the second container (40) is arranged within the first container (30) and wherein the second container (40) abuts at least on one wall (31) of the first container (30).

2. The mixing device according to claim 1, wherein the first container (30) is closable towards an upper side by a container lid (32) and wherein the second container (40) is provided within the first container (30) such that an upper boundary (44) of the second container (40) is spaced apart from the container lid (32) of the first container (30) and wherein the powder conduit (50) preferably extends through the container lid (32) of the first container into the second container.

3. The mixing device according to claim 1 or 2, wherein a powder opening (43) for discharging the first and/or the second powder component is provided at a lower boundary (42) of the second container (40).

4. The mixing device according to one of the preceding claims, further comprising at least a first closure device (61) that is configured to close and/or open the discharge opening (34) of the first container (30), and/or at least a second closure device (62) that is configured to close and/or open the powder opening (43) of the second container (40).

5. The mixing device according to claim 4, in which the first closure device (61) and the second closure device (62) are configured to close and/or open the respective discharge opening (34) or powder opening (43) depending on an operating state of the respective other closure device and/or depending on a defined operating mode of the mixing device (18).

6. The mixing device according to claim 5, wherein at least one of the following operating states is provided:
a first state in which the discharge opening (34) of the first container (30) is open and the powder opening (43) of the second container (40) is closed and/or
a second state in which the discharge opening (34) of the first container (30) is closed and the powder opening (43) of the second container (40) is open and/or
a third state in which the discharge opening (34) of the first container (30) and the powder opening (43) of the second container (40) are both closed or both open.

7. The mixing device according to one of the claims 1 to 6, wherein a lower region of the first container (30), in particular its lower boundary (33), and/or the lower region of the second container (40), in particular its lower boundary (42), is or are designed to be funnel-shaped at least in sections thereof, and wherein preferably a lower region of the first container (30), in particular the discharge opening (34), can be connected to a conveyor module.

8. The mixing device according to one of claims 1 to 7, wherein the second container (40) is attached to at least one wall (31) of the first container (30).

9. The mixing device according to one of claims 1 to 8, wherein at least one deflecting element (45) is provided on the second container (40), which deflecting element extends substantially from the upper boundary (44) of the second container in the direction of at least one nearest wall (31) of the first container (30), and
wherein the deflecting element (45) is preferably inclined from the upper boundary (44) of the second container (40) towards the lower boundary (33) of the first container (30).

10. The mixing device according to one of claims 1 to 9, wherein the first and/or second container can be filled manually or and/or partially automatically and/or automatically, in particular via the powder conduit (50), and/or
wherein the powder conduit (50) is connected to a removal conduit (19) for removing the powder mixture from the mixing device (18).

11. The mixing device according to one of claims 1 to 10, further comprising a moistening device (53) designed and/or arranged and/or adjusted for moistening the first and/or second powder component, in the powder conduit (50) and/or in the fluidization zone (37).

12. An additive manufacturing device for manufacturing a three-dimensional object (2) by selective solidification of a building material (15) layer by layer,
wherein the manufacturing device (1) comprises and/or is connected to a mixing device (18) according to one of claims 1 to 11.

13. A method of producing a powder mixture from a first powder component and at least one second powder component in a mixing device (18), wherein
the first and/or the second powder component is received by a first container (30), wherein a discharge opening (34) for discharging the first and/or the second powder component is provided at a lower boundary (33) of the first container, and
the first and/or the second powder component is received by a second container (40), wherein the second container is designed to be at least partially open towards an upper side,
the first container (30) having, in particular at least on a container wall (31), at least one fluidization zone (37) for introducing a gas into the first container, and
wherein the mixing device (18) further comprises a powder conduit (50) that is connected to the discharge opening (34) of the first container (30) and is guided into the second container (40),
wherein the second container (40) is arranged within the first container (30) and wherein the second container (40) abuts at least on one wall (31) of the first container (30).

14. The method according to claim 13, **characterized by** the following steps:
a) introducing a gas through the first fluidization zone (37) into the first container (30) and/or through a second fluidization zone (47) into the second container (40); and
b) manual and/or partially automatic and/or automatic introduction (S1) of the first and/or second powder component into the first and/or second container (30, 40),
c) mixing (S2) the first and second powder components from the first and/or second container (30, 40)
d) discharging (S3) the first and/or second powder component through the discharge opening (34) of the first container (30) from the first container (30) via the powder conduit (50) into an additive manufacturing device (1) and/or a storage container (14),
e) optionally: determining (S4) a degree of fluidization of the first and/or second powder component and/or the powder mixture, and
f) optionally: controlling (S5) operating parameters of the aforementioned process steps as a function of the determined degree of fluidization.

## Revendications

1. Dispositif de mélange pour la fabrication d'un mélange de poudre constitué d'un premier composant de poudre et d'au moins un deuxième composant de poudre pour un dispositif de fabrication additive (1), dans lequel un objet tridimensionnel (2) peut être fabriqué par solidification sélective par couches d'un matériau de construction (15) qui comprend le mélange de poudre, le dispositif de mélange (18) comprenant :
un premier récipient (30) pour la réception du premier et/ou du deuxième composant de poudre, une ouverture de distribution (34) pour la distribution du premier et/ou du deuxième composant de poudre étant prévue au niveau d'une délimitation inférieure (33) du premier récipient (30), et
un deuxième récipient (40) pour la réception du premier et/ou du deuxième composant de poudre, le deuxième récipient (40) étant réalisé au moins en partie ouvert vers un côté supérieur,
le premier récipient (30) présentant, en particulier au moins au niveau d'une paroi de récipient (31), au moins une zone de fluidisation (37) pour l'introduction d'un gaz dans le premier récipient et
le dispositif de mélange (18) comprenant en outre une conduite de poudre (50) qui se raccorde à l'ouverture de distribution (34) du premier récipient (30) et est introduite dans le deuxième récipient (40), **caractérisé en ce que**
le deuxième récipient (40) est disposé à l'intérieur du premier récipient (30) et le deuxième récipient (40) s'appliquant au moins contre une paroi (31) du premier récipient (30).

2. Dispositif de mélange selon la revendication 1, le premier récipient (30) pouvant être fermé vers un côté supérieur par un couvercle de récipient (32) et le deuxième récipient (40) étant prévu à l'intérieur du premier récipient (30) de telle sorte qu'une délimitation supérieure (44) du deuxième récipient (40) soit espacée du couvercle de récipient (32) du premier récipient (30) et la conduite de poudre (50) étant guidée de préférence à travers le couvercle de récipient (32) du premier récipient dans le deuxième récipient.

3. Dispositif de mélange selon la revendication 1 ou 2, une ouverture de poudre (43) pour la distribution du premier et/ou du deuxième composant de poudre étant prévue au niveau d'une délimitation inférieure (42) du deuxième récipient (40).

4. Dispositif de mélange selon l'une quelconque des revendications précédentes, comprenant en outre au moins un premier dispositif de fermeture (61) qui est réalisé pour fermer et/ou libérer l'ouverture de distribution (34) du premier récipient (30), et/ou au moins un deuxième dispositif de fermeture (62) qui est réalisé pour fermer et/ou libérer l'ouverture de poudre (43) du deuxième récipient (40).

5. Dispositif de mélange selon la revendication 4, dans lequel le premier dispositif de fermeture (61) et le deuxième dispositif de fermeture (62) sont réalisés pour fermer et/ou libérer l'ouverture de distribution (34) ou l'ouverture de poudre (43) respective en fonction d'un état de fonctionnement de l'autre dispositif de fermeture respectif et/ou en fonction d'un mode de fonctionnement défini du dispositif de mélange (18).

6. Dispositif de mélange selon la revendication 5, dans lequel au moins l'un des états de fonctionnement suivants est prévu :
un premier état dans lequel l'ouverture de distribution (34) du premier récipient (30) est libérée et l'ouverture de poudre (43) du deuxième récipient (40) est fermée, et/ou
un deuxième état dans lequel l'ouverture de distribution (34) du premier récipient (30) est fermée et l'ouverture de poudre (43) du deuxième récipient (40) est libérée, et/ou
un troisième état dans lequel l'ouverture de distribution (34) du premier récipient (30) et l'ouverture de poudre (43) du deuxième récipient (40) sont toutes deux fermées ou toutes deux libérées.

7. Dispositif de mélange selon l'une quelconque des revendications 1 à 6, une région inférieure du premier récipient (30), en particulier sa délimitation inférieure (33), et/ou la région inférieure du deuxième récipient (40), en particulier sa délimitation inférieure (42), étant réalisées au moins en partie en forme d'entonnoir et de préférence une région inférieure du premier récipient (30), en particulier l'ouverture de distribution (34), pouvant être raccordée à un module de transport.

8. Dispositif de mélange selon l'une quelconque des revendications 1 à 7, le deuxième récipient (40) étant fixé au moins au niveau d'une paroi (31) du premier récipient (30).

9. Dispositif de mélange selon l'une quelconque des revendications 1 à 8, au moins un élément de déviation (45) étant prévu au niveau du deuxième récipient (40), lequel s'étend sensiblement depuis la délimitation supérieure (44) du deuxième récipient dans la direction d'au moins une paroi (31) la plus proche du premier récipient (30) et
l'élément de déviation (45) étant incliné de préférence à partir de la délimitation supérieure (44) du deuxième récipient (40) dans la direction de la délimitation inférieure (33) du premier récipient (30).

10. Dispositif de mélange selon l'une quelconque des revendications 1 à 9, le premier et/ou le deuxième récipient pouvant être rempli manuellement et/ou de manière partiellement automatique et/ou automatiquement, en particulier par la conduite de poudre (50), et/ou
la conduite de poudre (50) étant connectée à une conduite de prélèvement (19) pour le prélèvement du mélange de poudre du dispositif de mélange (18).

11. Dispositif de mélange selon l'une quelconque des revendications 1 à 10, comprenant en outre un dispositif d'humidification (53) réalisé et/ou disposé et/ou orienté pour l'humidification du premier et/ou du deuxième composant de poudre, dans la conduite de poudre (50) et/ou dans la zone de fluidisation (37).

12. Dispositif de fabrication additive pour la fabrication d'un objet tridimensionnel (2) par solidification sélective par couches d'un matériau de construction (15),
le dispositif de fabrication (1) présentant un dispositif de mélange (18) selon l'une quelconque des revendications 1 à 11 et/ou étant connecté à celui-ci.

13. Procédé de fabrication d'un mélange de poudre constitué d'un premier composant de poudre et d'au moins un deuxième composant de poudre dans un dispositif de mélange (18),
le premier et/ou le deuxième composant de poudre étant reçus par un premier récipient (30), une ouverture de distribution (34) pour la distribution du premier et/ou du deuxième composant de poudre étant prévue au niveau d'une délimitation inférieure (33) du premier récipient, et
le premier et/ou le deuxième composant de poudre étant reçus par un deuxième récipient (40), le deuxième récipient étant réalisé au moins en partie ouvert vers un côté supérieur,
le premier récipient (30) présentant, en particulier au moins au niveau d'une paroi de récipient (31), au moins une zone de fluidisation (37) pour l'introduction d'un gaz dans le premier récipient et
le dispositif de mélange (18) comprenant en outre une conduite de poudre (50) qui est raccordée à l'ouverture de distribution (34) du premier récipient (30) et est introduite dans le deuxième récipient (40),
le deuxième récipient (40) étant disposé à l'intérieur du premier récipient (30) et le deuxième récipient (40) s'appliquant au moins contre une paroi (31) du premier récipient (30).

14. Procédé selon la revendication 13, **caractérisé par** les étapes suivantes :
a) introduction d'un gaz à travers la première zone de fluidisation (37) dans le premier récipient (30) et/ou à travers une deuxième zone de fluidisation (47) dans le deuxième récipient (40) et
b) remplissage manuel et/ou de manière partiellement automatique et/ou automatique (S1) du premier et/ou du deuxième composant de poudre dans le premier et/ou le deuxième récipient (30, 40),
c) mélange (S2) du premier et du deuxième composant de poudre du premier et/ou du deuxième récipient (30, 40),
d) évacuation (S3) du premier et/ou du deuxième composant de poudre à travers l'ouverture de distribution (34) du premier récipient (30) du premier récipient (30) par la conduite de poudre (50) dans un dispositif de fabrication additive (1) et/ou un réservoir (14),
e) optionellement : détermination (S4) d'un degré de fluidisation du premier et/ou du deuxième composant de poudre et/ou du mélange de poudre et
f) optionellement : commande (S5) de paramètres de fonctionnement des étapes de procédé susmentionnées en fonction du degré de fluidisation déterminé.
